# EUROPEAN PATENT APPLICATION

(11) **EP 4 625 313 A1**
(43) Date of publication of application: **01.10.2025**
(21) Application number: 23917591.2
(22) Date of filing: 07.09.2023
(51) Int. Cl.: G06T 7/00, G01N 23/04, G01N 23/18, G06V 10/82

(54) **MODEL GENERATION METHOD, MODEL GENERATION SYSTEM, MODEL GENERATION PROGRAM, FOREIGN SUBSTANCE DETECTION METHOD, FOREIGN SUBSTANCE DETECTION SYSTEM, FOREIGN SUBSTANCE DETECTION PROGRAM, AND INFERENCE MODEL**

(30) Priority: 18.01.2023 JP 2023006083; 16.05.2023 JP 2023080717
(71) Applicant: Hamamatsu Photonics K.K., Hamamatsu-shi, Shizuoka 435-8558 (JP)
(72) Inventor: ONISHI Tatsuya, Hamamatsu-shi, Shizuoka 435-8558 (JP); TSUCHIYA Satoshi, Hamamatsu-shi, Shizuoka 435-8558 (JP)
(74) Representative: Hoffmann Eitle
(86) International application number: PCT/JP2023/032684
(87) International publication number: WO 2024/154379

(57) **Abstract**

A foreign object is detected with high accuracy. A model generation method is a method for generating an inference model used for detecting a foreign object included in an image with a target object captured, and includes: an acquisition step for training (S01) for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and a model generation step (S02) for generating the inference model by performing training using the acquired images for training.

## Description

### Technical Field

The present invention relates to a model generation method, a model generation system, and a model generation program for generating an inference model used to detect a foreign object included in an image in which a target object is captured, a foreign object detection method, a foreign object detection system, and a foreign object detection program for detecting a foreign object included in an image in which a target object is captured by using the generated inference model, and the generated inference model.

### Background Art

Patent Literature 1 shows that a restored image is generated from an inspection target image of the appearance of an inspection target object by using an inference model generated by machine learning and the inspection target object is inspected based on the difference between the inspection target image and the restored image. In Patent Literature 1, the inference model used for inspection is generated from a non-defective image of the appearance of an inspection target object determined to be a non-defective product and a pseudo-defect image generated by combining the non-defective image with an image showing a defect. This is said to improve the inspection accuracy.

### Citation List

### Patent Literature

Patent Literature 1: Japanese Unexamined Patent Publication No. 2018-205163

### Summary of Invention

### Technical Problem

However, in the method disclosed in Patent Literature 1, for example, when detecting a foreign object in an image obtained by imaging a packaged item with X-rays, the foreign object may not necessarily be appropriately detected. In particular, when the target object contains a plurality of items like pasta and a foreign object is small compared to each individual item, the foreign object may not necessarily be appropriately detected even if the inference model generated by the method shown in Patent Literature 1 is used.

One embodiment of the present invention has been made in view of the above, and it is an object thereof to provide a model generation method, a model generation system, a model generation program, a foreign object detection method, a foreign object detection system, a foreign object detection program, and an inference model that can detect a foreign object with high accuracy.

### Solution to Problem

In order to achieve the aforementioned object, a model generation method according to one embodiment of the present invention is a model generation method for generating an inference model used for detecting a foreign object included in an image with a target object captured, and includes: an acquisition step for training for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and a model generation step for generating the inference model by performing training using the images for training acquired in the acquisition step for training. The training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

In the model generation method according to one embodiment of the present invention, in addition to the normal images, two different types of foreign object images are used for training to generate an inference model. The inference model generated in this manner reflects a target object, among those captured in the input image, in the output, but does not reflect a foreign object in the output. Therefore, a foreign object can be detected with high accuracy by detecting the foreign object using the generated inference model.

The foreign object not assumed to be a detection target may be a natural image. According to this configuration, it is possible to generate the inference model more appropriately and reliably.

The second normal image and the third normal image may be the first normal image. In the acquisition step for training, the second foreign object image may be generated and acquired by adding a foreign object assumed to be a detection target to the first normal image, and the third foreign object image may be generated and acquired by adding a foreign object not assumed to be a detection target to the first normal image. According to this configuration, it is possible to acquire the second foreign object image and the third foreign object image easily and reliably. As a result, it is possible to generate the inference model easily and reliably.

The target object may be a specific type of object, and the first normal image, the second normal image, the second foreign object image, the third normal image, and the third foreign object image acquired in the acquisition step for training may be images in which the specific type of object is captured as the target object for training. According to this configuration, it is possible to generate the inference model for detecting a foreign object with high accuracy for a specific type of object.

A ratio of the number of first normal images, the number of combinations of the second normal images and the second foreign object images, and the number of combinations of the third normal images and the third foreign object images acquired in the acquisition step for training may be a ratio set in advance. According to this configuration, it is possible to generate the inference model more appropriately and reliably.

The foreign object not assumed to be a detection target may be an image drawn based on a calculation expression. According to this configuration, it is possible to generate the inference model more appropriately and reliably.

The third foreign object image may be an image in which the foreign object not assumed to be a detection target is added to the third normal image by at least one of transparent addition and replacement addition. According to this configuration, it is possible to generate the inference model more appropriately and reliably.

The inference model may be a model that includes a neural network having a plurality of layers, has a structure that performs concatenation between the layers, and adds up an image after the concatenation and an input image. According to this configuration, it is possible to generate the inference model for detecting a foreign object with high accuracy.

In the model generation step, a new second inference model may be generated by performing new training, the new second inference model being generated by adding a part for outputting information indicating a degree of foreign object at each position in an image input to the generated inference model to an output side of the inference model. According to this configuration, it is possible to generate the second inference model for detecting a foreign object with high accuracy.

One embodiment of the present invention can be described not only as an invention of the model generation method as described above but also as inventions of a model generation system and a model generation program as follows. These differ only in category, but are substantially the same invention and have similar functions and effects.

That is, a model generation system according to one embodiment of the present invention is a model generation system for generating an inference model used for detecting a foreign object included in an image with a target object captured, and includes: an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and a model generation means for generating the inference model by performing training using the images for training acquired by the acquisition means. The training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

A model generation program according to one embodiment of the present invention is a model generation program causing a computer to operate as a model generation system for generating an inference model used for detecting a foreign object included in an image with a target object captured, and the model generation program causes the computer to function as: an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and a model generation means for generating the inference model by performing training using the images for training acquired by the acquisition means. The training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

In addition, in order to achieve the aforementioned object, a foreign object detection method according to one embodiment of the present invention is a foreign object detection method for detecting a foreign object included in an image with a target object captured by using the inference model generated by the model generation method, and includes: an acquisition step for detection for acquiring a target image for which a foreign object is to be detected; a calculation step for inputting information based on the target image acquired in the acquisition step for detection to the inference model, performing a calculation, and obtaining an output from the inference model; and a detection step for calculating a difference between information related to the input to the inference model in the calculation step and information related to the output from the inference model and detecting a foreign object included in the target image from the calculated difference.

In the foreign object detection method according to one embodiment of the present invention, the inference model described above is used to detect a foreign object. Therefore, according to the foreign object detection method according to one embodiment of the present invention, it is possible to detect a foreign object with high accuracy.

In addition, in order to achieve the aforementioned object, a foreign object detection method according to one embodiment of the present invention is a foreign object detection method for detecting a foreign object included in an image with a target object captured by using the second inference model generated by the model generation method, and includes: an acquisition step for detection for acquiring a target image for which a foreign object is to be detected; a calculation step for inputting information based on the target image acquired in the acquisition step for detection to the second inference model, performing a calculation, and obtaining an output from the second inference model; and a detection step for detecting a foreign object included in the target image from the output from the second inference model obtained in the calculation step.

In the foreign object detection method according to one embodiment of the present invention, the second inference model described above is used to detect a foreign object. Therefore, according to the foreign object detection method according to one embodiment of the present invention, it is possible to detect a foreign object with high accuracy.

One embodiment of the present invention can be described not only as an invention of the foreign object detection method as described above but also as inventions of a foreign object detection system and a foreign object detection program as follows. These differ only in category, but are substantially the same invention and have similar functions and effects.

That is, a foreign object detection system according to one embodiment of the present invention is a foreign object detection system for detecting a foreign object included in an image with a target object captured by using the inference model generated by the model generation method, and includes: an acquisition means for detection for acquiring a target image for which a foreign object is to be detected; a calculation means for inputting information based on the target image acquired by the acquisition means for detection to the inference model, performing a calculation, and obtaining an output from the inference model; and a detection means for calculating a difference between information related to the input to the inference model by the calculation means and information related to the output from the inference model and detecting a foreign object included in the target image from the calculated difference.

A foreign object detection system according to one embodiment of the present invention is a foreign object detection system for detecting a foreign object included in an image with a target object captured by using the second inference model generated by the model generation method, and includes: an acquisition means for detection for acquiring a target image for which a foreign object is to be detected; a calculation means for inputting information based on the target image acquired by the acquisition means for detection to the second inference model, performing a calculation, and obtaining an output from the second inference model; and a detection means for detecting a foreign object included in the target image from the output from the second inference model obtained by the calculation means.

A foreign object detection program according to one embodiment of the present invention is a foreign object detection program causing a computer to operate as a foreign object detection system that detects a foreign object included in an image with a target object captured by using the inference model generated by the model generation method, and the foreign object detection causes the computer to function as: an acquisition means for detection for acquiring a target image for which a foreign object is to be detected; a calculation means for inputting information based on the target image acquired by the acquisition means for detection to the inference model, performing a calculation, and obtaining an output from the inference model; and a detection means for calculating a difference between information related to the input to the inference model by the calculation means and information related to the output from the inference model and detecting a foreign object included in the target image from the calculated difference.

A foreign object detection program according to one embodiment of the present invention is a foreign object detection program causing a computer to operate as a foreign object detection system that detects a foreign object included in an image with a target object captured by using the inference model generated by the model generation method, and the foreign object detection program causes the computer to function as: an acquisition means for detection for acquiring a target image for which a foreign object is to be detected; a calculation means for inputting information based on the target image acquired by the acquisition means for detection to the second inference model, performing a calculation, and obtaining an output from the second inference model; and a detection means for detecting a foreign object included in the target image from the output from the second inference model obtained by the calculation means.

The inference model itself generated by the model generation method according to one embodiment of the present invention is also an invention having a novel configuration. That is, the inference model according to one embodiment of the present invention is an inference model for causing a computer to function to receive information based on an image, perform a calculation according to the input, and output information, and the inference model is generated by the model generation method.

### Advantageous Effects of Invention

According to one embodiment of the present invention, it is possible to detect a foreign object with high accuracy.

### Brief Description of Drawings

FIG. 1 is a diagram showing the configurations of a model generation system and a foreign object detection system according to an embodiment of the present invention.
FIG. 2 is a drawing showing examples of a target image used to detect a foreign object and an image that is output when the target image is input to an inference model.
FIG. 3 is a drawing showing an example of an abnormality map generated as a result of detecting a foreign object.
FIG. 4 is a drawing schematically showing an inference model.
FIG. 5 is a drawing showing examples of a first normal image used for training.
FIG. 6 is a drawing showing examples of a combination of a second normal image and a second foreign object image used for training.
FIG. 7 is a drawing showing an example of a combination of a third normal image and a third foreign object image used for training.
FIG. 8 is a drawing showing examples of an image used to generate a third foreign object image.
FIG. 9 is a flowchart showing a model generation method that is a process performed by the model generation system according to the embodiment of the present invention.
FIG. 10 is a flowchart showing a foreign object detection method that is a process performed by the foreign object detection system according to the embodiment of the present invention.
FIG. 11 is a diagram showing examples of a detection result according to a comparative example and a detection result according to an embodiment of the present invention.
FIG. 12 is a drawing showing examples of an image used for training and an image and an abnormality map output from an inference model.
FIG. 13 is a drawing showing examples of an image used for training and an image and an abnormality map output from an inference model.
FIG. 14 is an example of an image when rice is a target object.
FIG. 15 is an example of an image when granola is a target object.
FIG. 16 is a diagram showing the configurations of a model generation program and a foreign object detection program according to an embodiment of the present invention, together with a recording medium.
FIG. 17 is a drawing showing an example of a combination of a third normal image and a third foreign object image used for training.
FIG. 18 is a drawing showing an example of a combination of a third normal image and a third foreign object image used for training.
FIG. 19 is a drawing showing an example of an image used to generate a third foreign object image.
FIG. 20 is a drawing showing examples of an image used to generate a third foreign object image.
FIG. 21 is a drawing showing examples of an image used to generate a third foreign object image.
FIG. 22 is a drawing showing examples of an image used to generate a third foreign object image.
FIG. 23 is a drawing showing examples of a detection result according to a comparative example and a detection result according to an embodiment of the present invention.
FIG. 24 is a drawing showing examples of a detection result according to a comparative example and a detection result according to an embodiment of the present invention.
FIG. 25 is a drawing showing examples of a third foreign object image used in training.
FIG. 26 is a drawing showing examples of a combination of a third normal image and a third foreign object image used for training.
FIG. 27 is a drawing showing examples of a combination of a third normal image and a third foreign object image used for training.
FIG. 28 is a drawing showing an example of a detection result according to an embodiment of the present invention.
FIG. 29 is a drawing showing an example of a detection result according to an embodiment of the present invention.
FIG. 30 is a drawing schematically showing an example of an inference model.
FIG. 31 is a drawing schematically showing an example of a second inference model.
FIG. 32 is a drawing showing an example of an image used in training for generating a second inference model.
FIG. 33 is a drawing showing an example of a detection result according to an embodiment of the present invention using a second inference model.

### Description of Embodiments

Hereinafter, embodiments of a model generation method, a model generation system, a model generation program, a foreign object detection method, a foreign object detection system, a foreign object detection program, and an inference model according to the present invention will be described in detail with reference to the drawings. In addition, in the description of the drawings, the same elements are denoted by the same reference numerals, and repeated description thereof will be omitted.

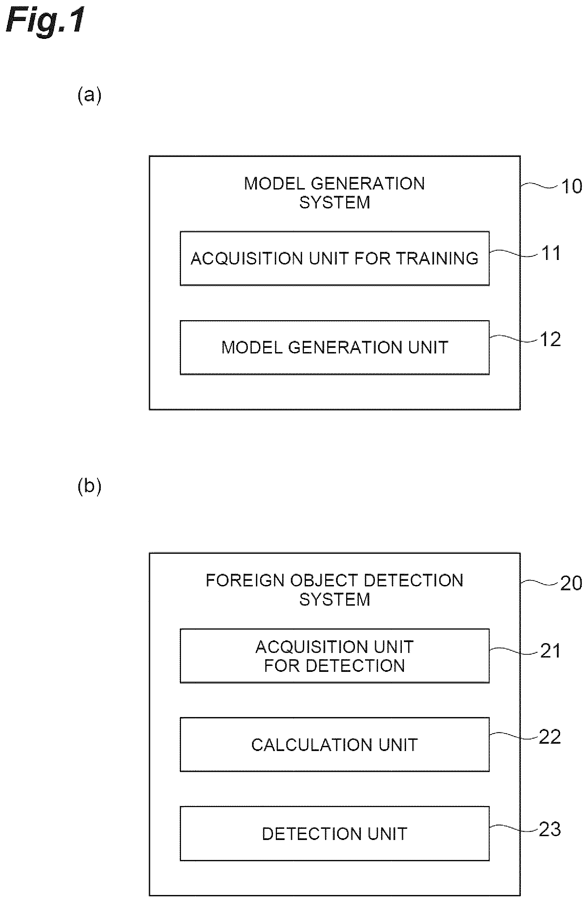

FIG. 1(a) shows a model generation system 10 according to the present embodiment. FIG. 1(b) shows a foreign object detection system 20 according to the present embodiment. The model generation system 10 is a system (apparatus) that generates an inference model (learning model, trained model), which is used to detect a foreign object included in an image in which a target object is captured, by performing machine learning training. The foreign object detection system 20 is a system (apparatus) that detects a foreign object included in an image in which a target object is captured, by using an inference model generated by the model generation system 10.

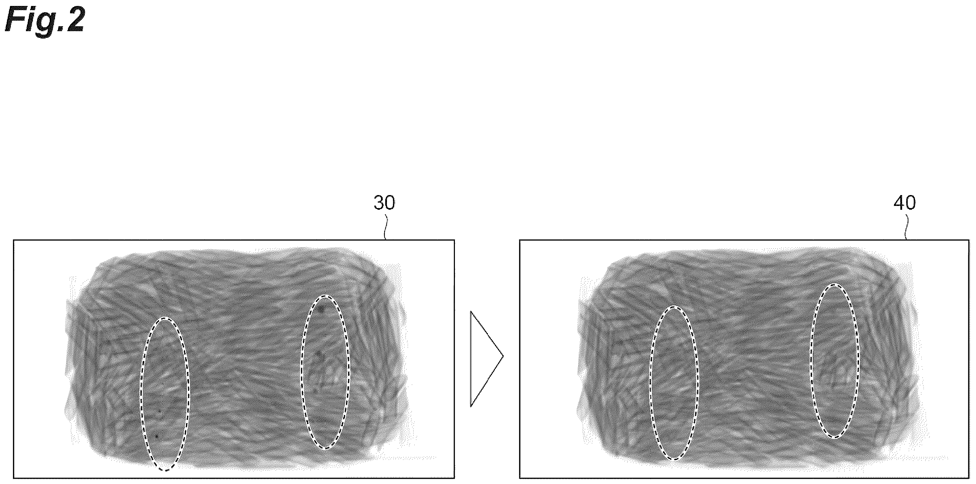

FIG. 2 shows an example of a target image 30 used to detect a foreign object. The detection of a foreign object in the present embodiment is the detection of a foreign object in a food product that is packaged as a product, for example, a food product that is packaged in a plastic bags. The detection of a foreign object is performed, for example, in the manufacturing process of a food product in order to determine whether the manufactured product is a non-defective product or not. If no foreign object is detected in the image of a detection target product, the product is determined to be a non-defective product, and if a foreign object is detected in the image of the detection target product, the product is determined to be a defective product. The image used to detect a foreign object is an image captured using X-rays for each product as a detection target. Portions surrounded by the dashed lines in the drawing are portions where there is a foreign object.

An assumed foreign object is, for example, something that may be included during the manufacturing process. In the present embodiment, an example is shown in which a ball (a SUS (Steel Use Stainless) ball, a glass ball), which is smaller compared to food, is used as a foreign object. A product for which a foreign object is to be detected is, for example, pasta such as penne. In addition, products for which a foreign object is to be detected may be other than pasta, for example, rice and granola. In addition, a foreign object does not have to be smaller than a target object such as food, but may be of the same size as the target object or larger than the target object. As shown in the target image 30 in FIG. 2, a product such as pasta usually contain many similarly shaped pieces in one package. In such a case, it is difficult to detect a foreign object with high accuracy using the conventional methods. However, in the present embodiment, it is possible to detect a foreign object with high accuracy.

In addition, a target object (a food product in the example of the present embodiment) containing a foreign object, a foreign object, and an image (an X-ray image in the example of the present embodiment) are not limited to those in the present embodiment, but may be any thing to which the present embodiment can be applied. In addition, a foreign object to be detected does not necessarily have to be something separate from a target object (food in the above example), but may be a defect such as an imperfection or a scratch appearing on the target object. That is, the detection of a foreign object may be the detection of whether the target object is a defective product or not.

Each of the model generation system 10 and the foreign object detection system 20 includes a conventional computer including hardware, such as a processor such as a CPU (Central Processing Unit), a memory, and a communication module. The functions of the model generation system 10 and the foreign object detection system 20, which will be described later, are realized by these components operating through programs and the like. In FIG. 1, the model generation system 10 and the foreign object detection system 20 are shown as separate systems (apparatuses), but may be realized by the same system (apparatus). The computer configuring the model generation system 10 and the foreign object detection system 20 may be a computer system including a plurality of computers. In addition, the computer may be configured by cloud computing or edge computing.

Next, the functions of the model generation system 10 and the foreign object detection system 20 according to the present embodiment will be described. As shown in FIG. 1, the model generation system 10 includes an acquisition unit for training 11 and a model generation unit 12.

Before describing each function of the model generation system 10, an inference model generated by the model generation system 10 will be described. In addition, an overview of foreign object detection by the foreign object detection system 20 using an inference model will be described. The inference model is a model that receives an image of a foreign object detection target and outputs (infers) an image from which a foreign object portion of the input image has been removed (inferred to have removed a foreign object portion of the input image). FIG. 2 shows an example of the target image 30 as a foreign object detection target, which is input to the inference model, and an example of an image 40, which is output when the target image 30 is input to the inference model and from which a foreign object portion has been removed (inferred to have removed a foreign object portion). A foreign object is captured in a portion surrounded by the dashed line in the target image 30, but no foreign object is captured in a portion at the same position in the image 40 output from the inference model.

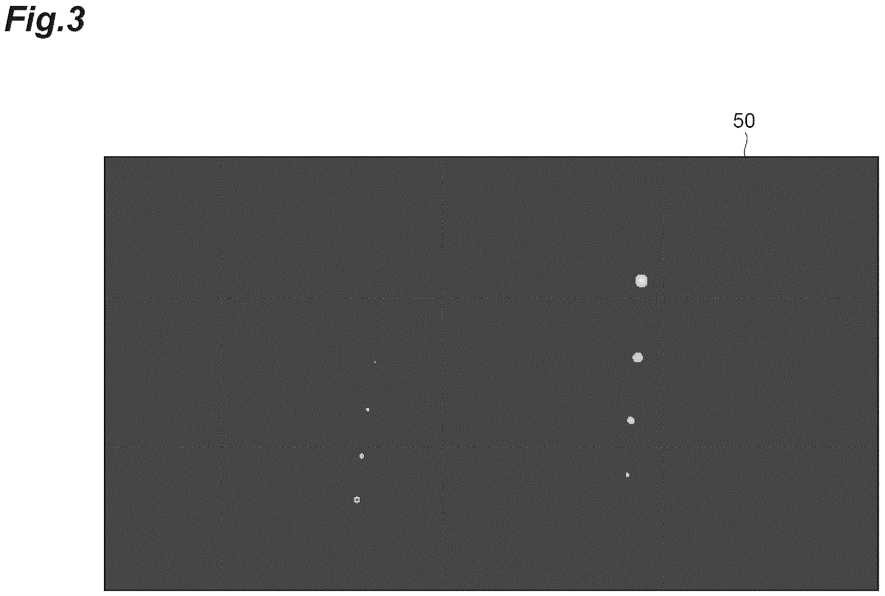

By taking the difference between the image input to the inference model and the image output from the inference model, it is possible to obtain an image (information) showing only the foreign object removed by the inference model. FIG. 3 shows an abnormality map 50, which is an image of the difference between the target image 30 input to the inference model and the image 40 output from the inference model in FIG. 2. Through the abnormality map 50, a foreign object can be identified. The detection of a foreign object by the foreign object detection system 20 using the inference model corresponds to, for example, the generation of an abnormality map.

The inference model includes, for example, a neural network. The neural network may be a multilayer neural network. That is, the inference model may be generated by deep learning. In addition, the neural network may be a convolutional neural network (CNN).

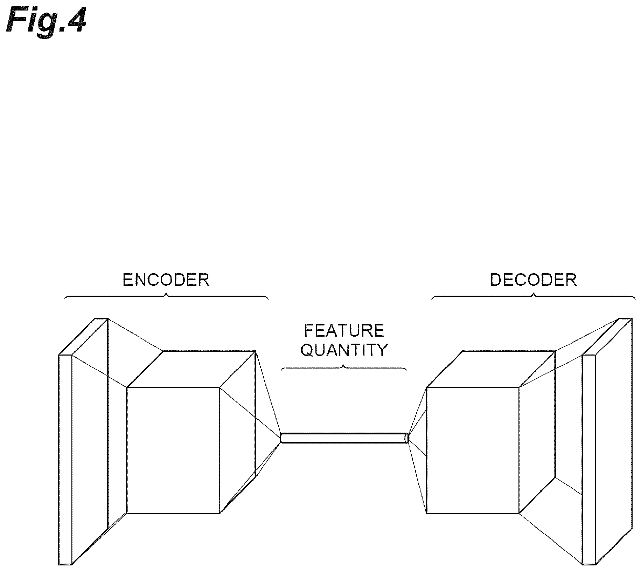

FIG. 4 schematically shows an inference model according to the present embodiment. The inference model includes an encoder that encodes an input image into a feature quantity and a decoder that decodes the feature quantity output from the encoder into an image.

In the inference model, neurons for inputting image-based information are provided in the input layer of the encoder. For example, the information input to the inference model is the pixel value (brightness value) of each pixel in the image. In this case, as many neurons as the number of pixels in the image are provided in the input layer, and the pixel value of the corresponding pixel is input to each neuron. In addition, the information input to the inference model may be other than the pixel value of each pixel as long as the information is based on the image.

In the inference model, neurons for outputting an image are provided in the output layer of the decoder. For example, the information output from the inference model is the pixel value of each pixel in the image. In this case, as many neurons as the number of pixels in the image are provided in the output layer, and the pixel value of the corresponding pixel is output from each neuron. In addition, the information output from the inference model may be other than the pixel value of each pixel as long as the output image described above can be generated.

In addition, the inference model may be other than the neural network as long as the inference model is generated by machine learning training and the input and output described above are performed.

The inference model is assumed to be used as a program module that is a part of artificial intelligence software. For example, the inference model is used in a computer including a processor and a memory, and the processor of the computer operates according to instructions from the model stored in the memory. For example, according to the instruction, the processor of the computer operates to input information to the model, perform a calculation according to the model, and output a result from the model. Specifically, according to the instruction, the processor of the computer operates to input information to the input layer of the neural network, perform a calculation based on parameters such as learned weighting coefficients in the neural network, and output a result from the output layer of the neural network. The above is an overview of the inference model generated by the model generation system 10 and the detection of a foreign object by the foreign object detection system 20 using the inference model.

The acquisition unit for training 11 is an acquisition means for training for acquiring images for training. The images for training are a first normal image in which a target object for training is captured, a second normal image in which a target object for training is captured, a second foreign object image in which a foreign object assumed to be a detection target is added to the second normal image, a third normal image in which a target object for training is captured, and a third foreign object image in which a foreign object not assumed to be a detection target is added to the third normal image. The foreign object that is not assumed to be a detection target may be a natural image.

The second normal image and the third normal image may be regarded as a first normal image, and the acquisition unit for training 11 may add a foreign object assumed to be a detection target to the first normal image to generate and acquire a second foreign object image, and may add a foreign object not assumed to be a detection target to the first normal image to generate and acquire a third foreign object image. The target object may be a specific type of object, and the first normal image, the second normal image, the second foreign object image, the third normal image, and the third foreign object image acquired by the acquisition unit for training 11 may be images in which the specific type of object is captured as a target object for training. The ratio of the number of first normal images, the number of combinations of the second normal images and the second foreign object images, and the number of combinations of the third normal images and the third foreign object images acquired by the acquisition unit for training 11 may be a ratio set in advance.

The inference model is generated by machine learning training using images for training acquired by the acquisition unit for training 11. The training of the inference model includes three types of training: training using a first normal image, training using a combination of a second normal image and a second foreign object image, and training using a combination of a third normal image and a third foreign object image.

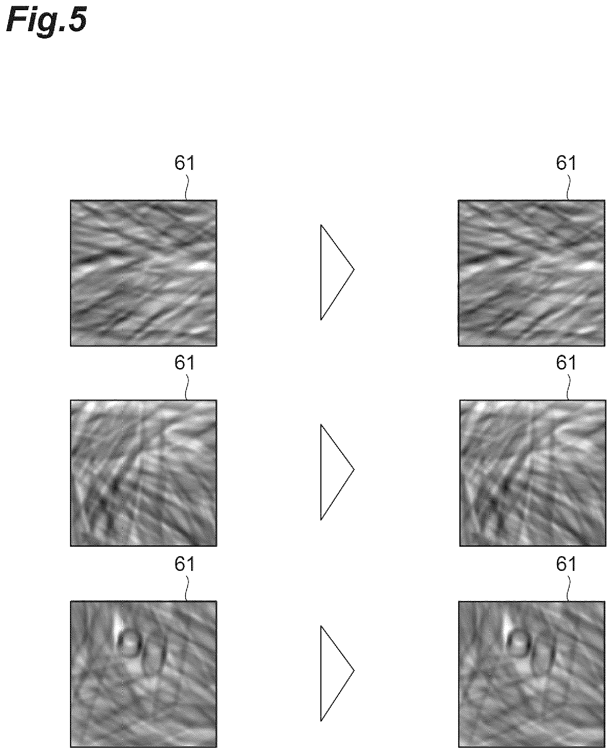

FIG. 5 shows examples of a first normal image 61. The first normal image 61 is an image in which a target object for training is captured and no foreign object is captured. The first normal image 61 is, for example, an image obtained by imaging a product, which has been confirmed to contain no foreign object, under the same conditions as when detecting a foreign object. The product that has been confirmed to contain no foreign object is a target object for training. In addition, the product is assumed to be the same type of object as a foreign object detection target. That is, if the foreign object detection target is a pasta product, the first normal image 61 is assumed to be an image of the same type of pasta product.

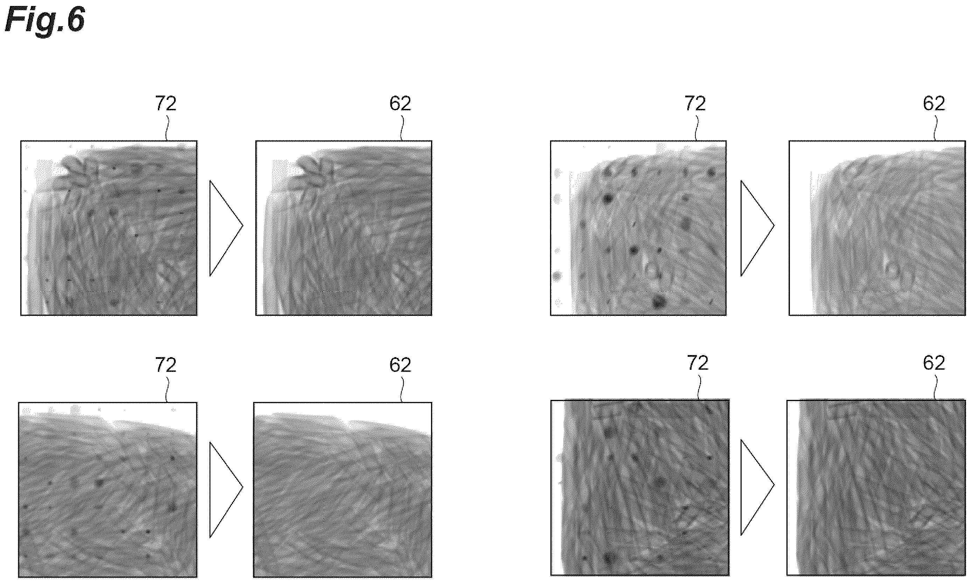

FIG. 6 shows examples of a second normal image 62 and a second foreign object image 72. The second normal image 62 is an image in which a target object for training is captured and no foreign object is captured, and is the same image as the first normal image 61. The first normal image 61 may be the second normal image 62. The second foreign object image 72 is an image in which (an image of) a foreign object (for example, the small ball described above) assumed to be a detection target is added to the second normal image 62. The second foreign object image 72 is, for example, an image obtained by superimposing an image, which is obtained by imaging only the foreign object assumed to be a detection target, on the second normal image 62. Alternatively, instead of using an image obtained by imaging only the foreign object, the second foreign object image 72 may be generated by performing image processing on the second normal image 62, assuming the foreign object assumed to be a detection target. The image processing may be performed using simulation (for example, simulation of image processing of X-ray images) techniques. In training the inference model, a combination of the second foreign object image 72 and the second normal image 62 used to generate the second foreign object image 72 is used.

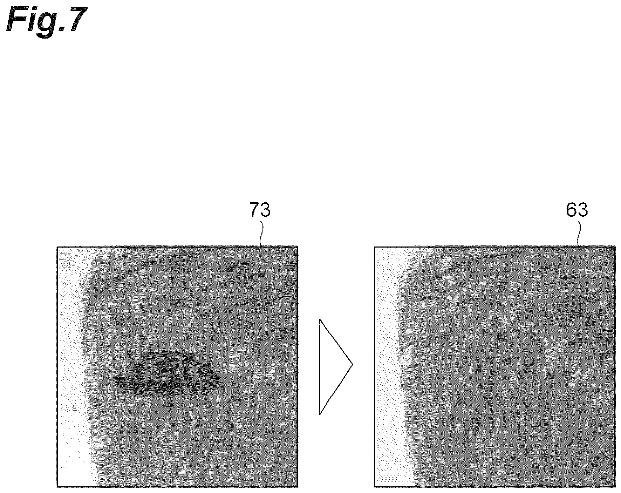

FIG. 7 shows examples of a third normal image 63 and a third foreign object image 73. The third normal image 63 is an image in which a target object for training is captured and no foreign object is captured, and is the same image as the first normal image 61. The first normal image 61 may be the third normal image 63. The third foreign object image 73 is an image in which a foreign object that is not assumed to be a detection target is added to the third normal image 63. The third foreign object image 73 is, for example, an image obtained by superimposing an image of a foreign object, which is not assumed to be a detection target, on the third normal image 63.

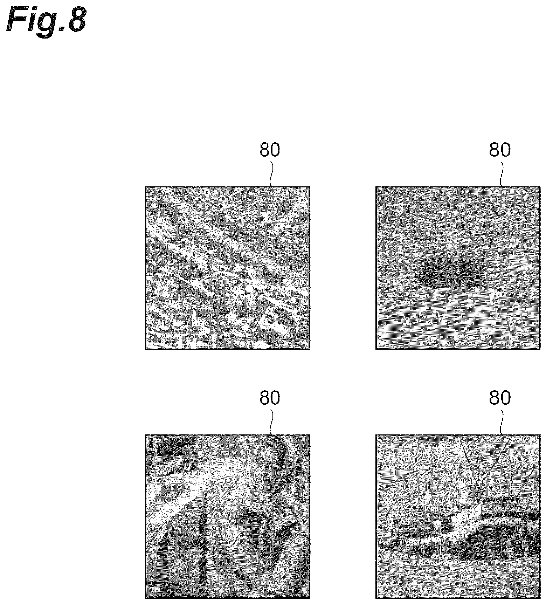

FIG. 8 shows examples of an image 80 of a foreign object used to generate the third foreign object image 73. As shown in FIG. 8, the foreign object added to the third normal image 63 to generate the third foreign object image 73 is a natural image. The natural image herein is an image that is obtained by imaging a landscape, a person, and the like and is completely different from the foreign object assumed to be a detection target. The third foreign object image 73 shown in FIG. 7 is obtained by superimposing an image of a tank in the upper right of FIG. 8 on the third normal image 63.

Alternatively, instead of using the image of the foreign object, the third foreign object image 73 may be generated by performing image processing on the third normal image 63, assuming the foreign object not assumed to be a detection target. The image processing may be performed using simulation techniques. In training the inference model, a combination of the third foreign object image 73 and the third normal image 63 used to generate the third foreign object image 73 is used.

The acquisition unit for training 11 acquires the first normal image 61, a combination of the second normal image 62 and the second foreign object image 72, and a combination of the third normal image 63 and the third foreign object image 73. For example, the acquisition unit for training 11 acquires each image by receiving each image input to the model generation system 10 by the user of the model generation system 10. In addition, the acquisition unit for training 11 may acquire each image by any other method.

Alternatively, the acquisition unit for training 11 acquires only the first normal image 61 among the above images in the same manner as described above. In addition, if only the first normal image 61 is to be acquired, an image transmitted from an imaging apparatus that obtains an image by imaging (for example, an X-ray imaging apparatus that obtains an X-ray image) may be received and acquired. The acquisition unit for training 11 sets the acquired first normal image 61 to be the second normal image 62 and the third normal image 63. The acquisition unit for training 11 generates and acquires the second foreign object image 72 from the second normal image 62 (first normal image 61). For example, the acquisition unit for training 11 acquires an image obtained by imaging only the foreign object assumed to be a detection target, and generates the second foreign object image 72 by superimposing the acquired image on the second normal image 62.

In addition, the acquisition unit for training 11 generates and acquires the third foreign object image 73 from the third normal image 63 (first normal image 61). For example, the acquisition unit for training 11 acquires the image 80 (for example, a natural image shown in FIG. 8) of a foreign object not assumed to be a detection target and generates the third foreign object image 73 by superimposing the acquired image on the third normal image 63. The images used to generate the second foreign object image 72 and the third foreign object image 73 may be acquired by the same method as for the first normal image 61 or by any other method.

Alternatively, the acquisition unit for training 11 may store in advance a method of image processing by simulation for generating the second foreign object image 72 and the third foreign object image 73 and perform image processing on the second normal image 62 and the third normal image 63 by the method to generate the second foreign object image 72 and the third foreign object image 73. In the image processing by simulation, for example, processing for changing the shape and contrast of the foreign object or adding scintillator-related blurring and afterglow-related blurring. In addition to the above, image processing may be performed according to changes in imaging conditions. The image processing by simulation can be realized by conventional methods. In addition, as a method used to generate the second foreign object image 72 and the third foreign object image 73, a method of superimposing images and a method of performing image processing by simulation may be combined.

The acquisition unit for training 11 acquires a number of images for training sufficient to allow the model generation unit 12 to perform training appropriately. The acquisition unit for training 11 acquires images for training so that the ratio of the number of first normal images 61, the number of combinations of the second normal images 62 and the second foreign object images 72, and the number of combinations of the third normal images 63 and the third foreign object images 73 becomes a ratio set in advance. For example, the acquisition unit for training 11 acquires images for training so that these numbers are the same, that is, these numbers are each 1/3 of the total number. This is because the images output from the inference model correspond to this ratio. The acquisition unit for training 11 outputs the acquired images for training 61, 62, 63, 72, and 73 to the model generation unit 12.

The model generation unit 12 is a model generation means for generating an inference model by performing training using the images for training acquired by the acquisition unit for training 11. The training for generating an inference model includes training in which information based on the first normal image 61 is input to the inference model and the information based on the first normal image 61 is output from the inference model, training in which information based on the second foreign object image 72 is input to the inference model and information based on the second normal image 62 is output from the inference model, and training in which information based on the third foreign object image 73 is input to the inference model and information based on the third normal image 63 is output from the inference model.

The model generation unit 12 generates an inference model, for example, as follows. The model generation unit 12 receives the images for training 61, 62, 63, 72, and 73 from the acquisition unit for training 11. The model generation unit 12 performs training for generating an inference model for each first normal image 61, for each combination of the second normal image 62 and the second foreign object image 72 corresponding to each other, and for each combination of the third normal image 63 and the third foreign object image 73 corresponding to each other.

Hereinafter, an example will be described in which an inference model receives an image itself and outputs an image itself. When training is performed using the first normal image 61, the model generation unit 12 performs training by inputting the first normal image 61 to the inference model and using the first normal image 61 as an output from the inference model, as shown in FIG. 5. When training is performed using a combination of the second normal image 62 and the second foreign object image 72 corresponding to each other, the model generation unit 12 performs training by inputting the second foreign object image 72 to the inference model and using the second normal image 62 corresponding to the second foreign object image 72 as an output from the inference model, as shown in FIG. 6. When training is performed using a combination of the third normal image 63 and the third foreign object image 73 corresponding to each other, the model generation unit 12 performs training by inputting the third foreign object image 73 to the inference model and using the third normal image 63 corresponding to the third foreign object image 73 as an output from the inference model, as shown in FIG. 7.

Each training itself described above, that is, updating the parameters of the inference model, can be done in the same manner as conventional machine learning training. In addition, the training may be performed collectively for each type of image (for each of the first normal image 61, a combination of the second normal image 62 and the second foreign object image 72 corresponding to each other, and a combination of the third normal image 63 and the third foreign object image 73 corresponding to each other), or may be performed by changing the type of image each time.

If the inference model is one in which information based on an image other than the image itself is input, the model generation unit 12 may generate information based on the images 61, 72, and 73 from the images 61, 72, and 73 corresponding to the input to the inference model, among the images for training, and perform training using the generated information as an input to the inference model. In addition, if the inference model is one in which information corresponding to an image other than the image itself is output, the model generation unit 12 may generate information corresponding to the images 61, 62, and 63 (information based on the images 61, 62, and 63) from the images 61, 62, and 63 corresponding to the output from the inference model, among the images for training, and perform training using the generated information as an output from the inference model.

The model generation unit 12 generates an inference model by using all of the images for training 61, 62, 63, 72, and 73 input from the acquisition unit for training 11 for training, for example. Alternatively, the model generation unit 12 may generate an inference model by performing training until the preset conditions for ending training other than the above are satisfied. The generated inference model is used in the foreign object detection system 20. The model generation unit 12 outputs the generated inference model. For example, the model generation unit 12 transmits the inference model to the foreign object detection system 20. In addition, the input of the inference model to the foreign object detection system 20 may be performed through something other than the output from the model generation unit 12. For example, the input of the inference model to the foreign object detection system 20 may be performed by the operation of the model generation system 10 or the foreign object detection system 20. The above is the function of the model generation system 10 according to the present embodiment.

As shown in FIG. 1, the foreign object detection system 20 includes an acquisition unit for detection 21, a calculation unit 22, and a detection unit 23.

The acquisition unit for detection 21 is an acquisition means for detection for acquiring the target image 30 for which a foreign object is to be detected. The acquisition unit for detection 21 receives and acquires, for example, an image transmitted from an imaging apparatus that obtains an image by imaging (for example, an X-ray imaging apparatus that obtains an X-ray image) as the target image 30. In addition, the acquisition unit for training 11 may acquire the target image 30 by any other method. The acquisition unit for detection 21 outputs the acquired target image 30 to the calculation unit 22.

The calculation unit 22 is a calculation unit that inputs information based on the target image 30 acquired by the acquisition unit for detection 21 to the inference model, performs a calculation, and obtains an output from the inference model. The calculation unit 22 receives and stores the inference model generated by the model generation system 10. The calculation unit 22 receives the target image 30 from the acquisition unit for detection 21.

The calculation unit 22 inputs the information based on the input target image 30 to the stored inference model, performs a calculation, and obtains an output from the inference model. When the inference model is set according to the type of target object, the calculation unit 22 uses an inference model according to the type of target object related to the target image 30 for calculation. For example, when the target object captured in the target image 30 is a pasta, an inference model for pasta is used.

The information input to the inference model depends on the inference model, and is, for example, the target image 30 itself as described above. In addition, the information input to the inference model may be information based on the target image 30 other than the target image 30 itself. In this case, the calculation unit 22 generates information to be input to the inference model from the target image 30. The information output from the inference model depends on the inference model, and is, for example, the image 40 from which a foreign object portion of the target image 30 has been removed (inferred to have removed a foreign object portion of the target image 30) as described above. In addition, the information output from the inference model may be information corresponding to the image 40 other than the image 40.

The calculation unit 22 outputs information related to input and output to and from the inference model to the detection unit 23. For example, the calculation unit 22 outputs the target image 30 and the image 40 output from the inference model, as information related to input and output to and from the inference model, to the detection unit 23. In addition, the calculation unit 22 may output information corresponding to the target image 30 and the image 40 output from the inference model, other than the target image 30 and the image 40 output from the inference model, to the detection unit 23.

The detection unit 23 is a detection means for calculating a difference between information related to the input to the inference model by the calculation unit 22 and the information related to the output from the inference model and detecting a foreign object included in the target image 30 from the calculated difference.

The detection unit 23 detects a foreign object, for example, as follows. The detection of a foreign object by the detection unit 23 is, for example, as described above, the generation of the abnormality map 50 that is information indicating a detection result as shown in FIG. 3. The detection unit 23 receives information related to input and output to and from the inference model, for example, the target image 30 and the image 40 output from the inference model, from the calculation unit 22.

The detection unit 23 generates the abnormality map 50 by taking the difference between these. Specifically, the abnormality map 50 is generated by taking the difference in pixel values between the target image 30 and the image 40 output from the inference model for each corresponding pixel. In the abnormality map 50, a portion having a pixel value other than 0, that is, a portion having a difference in pixel values between the images 30 and 40, is a portion detected (estimated) to include a foreign object.

The detection unit 23 outputs the abnormality map 50, which is information indicating the detection result. The information indicating the detection result may be output, for example, to another system (apparatus) or another module, or may be output in a form recognizable by the user of the foreign object detection system 20 (for example, display or audio output).

In addition, as detecting a foreign object, the detection unit 23 may store the criteria for detecting a foreign object in advance and determine whether or not a foreign object is included in the target image 30 from the abnormality map 50 based on the criteria. In addition, the detection unit 23 may perform processing other than that described above as long as the processing is to calculate a difference between information related to the input to the inference model and information related to the output from the inference model, and to detect a foreign object included in the target image 30 from the calculated difference. The above is the function of the foreign object detection system 20 according to the present embodiment.

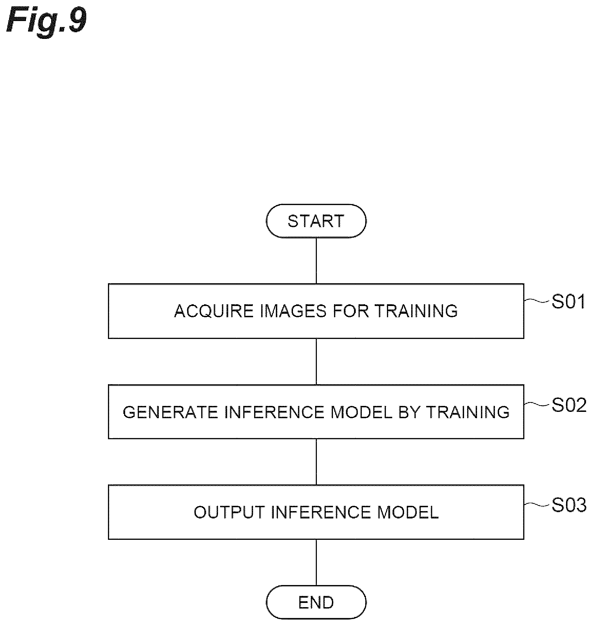

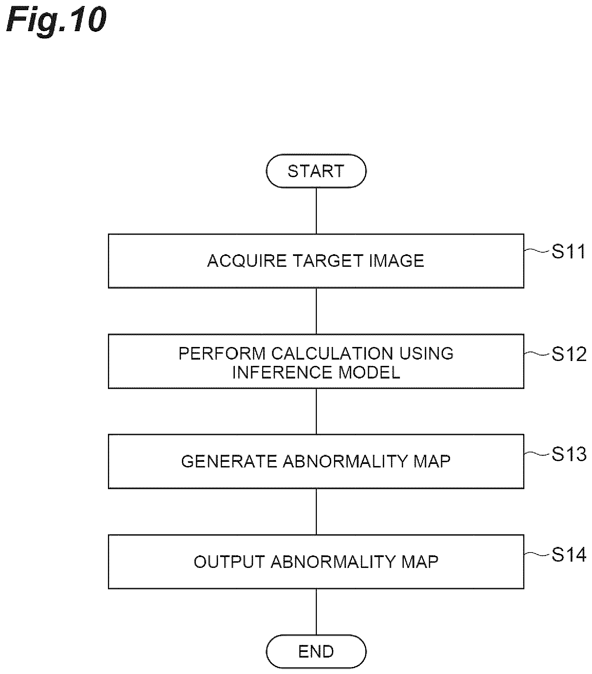

Next, processes performed by the model generation system 10 and the foreign object detection system 20 according to the present embodiment (operation methods performed by the model generation system 10 and the foreign object detection system 20) will be described with reference to the flowcharts in FIGS. 9 and 10.

First, a model generation method, which is a process performed by the model generation system 10 according to the present embodiment, will be described using the flowchart in FIG. 9. In this process, first, the acquisition unit for training 11 acquires the images for training 61, 62, 63, 72, and 73 (S01, acquisition step for training). The images for training are the first normal image 61, a combination of the second normal image 62 and the second foreign object image 72, and a combination of the third normal image 63 and the third foreign object image 73. The first to third normal images 61 to 63 are images in which a target object for training is captured. The second foreign object image 72 is an image in which a foreign object assumed to be a detection target is added to the second normal image. The third foreign object image 73 is an image in which a foreign object that is not assumed to be a detection target is added to the third normal image.

Then, the model generation unit 12 generates an inference model by performing training using the images for training 61, 62, 63, 72, and 73 to (S02, model generation step). The training includes training in which information based on the first normal image 61 is input to the inference model and the information based on the first normal image 61 is output from the inference model. The training includes training in which information based on the second foreign object image 72 is input to the inference model and information based on the second normal image 62 is output from the inference model. The training includes training in which information based on the third foreign object image 73 is input to the inference model and information based on the third normal image 63 is output from the inference model.

The generated inference model is output from the model generation unit 12 (S03). The inference model output from the model generation system 10 is stored in the foreign object detection system 20. The above is the model generation method, which is a process performed by the model generation system 10 according to the present embodiment.

Next, a foreign object detection method, which is a process performed by the foreign object detection system 20 according to the present embodiment, will be described with reference to the flowchart in FIG. 10. In this process, first, the acquisition unit for detection 21 acquires the target image 30 (S11, acquisition step for detection). Then, the calculation unit 22 inputs information based on the target image 30 to the inference model to perform a calculation, and obtains an output from the inference model (S12, calculation step). Then, as a process for detecting a foreign object included in the target image 30, the detection unit 23 calculates a difference between the information related to the input to the inference model and the information related to the output from the inference model to generate an abnormality map (S13, detection step). Then, the generated abnormality map is output from the detection unit 23 as information indicating the foreign object detection result (S14). The above is the foreign object detection method, which is a process performed by the foreign object detection system 20 according to the present embodiment.

From an image in which a number of target objects (for example, pasta) with roughly similar shapes are captured, such as an image of the food product described above, it may be difficult to detect a foreign object using conventional methods. For example, when the inference model is generated by performing training using only the combination of the second normal image 62 and the second foreign object image 72, a foreign object is reflected in the output or a part of the target object is missing. This may be due to the structure of the image above.

In the model generation method according to the present embodiment, in addition to the normal images 61 to 63, two different types of foreign object images 72 and 73 are used for training to generate an inference model. Specifically, as described above, three types of training are performed to generate an inference model: training using the first normal image 61 (training shown in FIG. 5), training using the second normal image 62 and the second foreign object image 72 (training shown in FIG. 6), and training using the third normal image 63 and the third foreign object image 73 (training shown in FIG. 7). The inference model generated in this manner reflects a target object, among those captured in the input image, in the output, but does not reflect a foreign object in the output. That is, an inference model that treats pasta as a target object becomes a pasta pass filter that allows the structure of pasta to pass therethrough but does not allow the structure of a foreign object to pass therethrough.

Therefore, even when a small foreign object is detected in an image in which a plurality of target objects with roughly the same shape, such as pasta, are captured as in the present embodiment, the foreign object can be removed from the output image. Therefore, according to the present embodiment, a foreign object can be detected with high accuracy by detecting the foreign object using the generated inference model.

In addition, as in the present embodiment, the foreign object that is not assumed to be a detection target used in generating the third foreign object image 73 may be a natural image. According to this configuration, it is possible to generate an inference model more appropriately and reliably. However, the foreign object that is not assumed to be a detection target may be images of various textures other than the natural image.

In addition, as in the present embodiment, the second normal image 62 and the third normal image 63 may be the first normal image 61. In addition, a foreign object assumed to be a detection target may be added to the first normal image 61 to generate and acquire the second foreign object image 72, and a foreign object not assumed to be a detection target may be added to the first normal image 61 to generate and acquire the third foreign object image 73. According to this configuration, if the first normal image 61 can be acquired as the normal images 61 to 63, the second foreign object image 72 and the third foreign object image 73 can be acquired easily and reliably. As a result, all of the images for training 61, 62, 63, 72, and 73 can be acquired, and the inference model can be generated easily and reliably. However, the acquisition of the images for training 61, 62, 63, 72, and 73 does not need to be performed as described above, and may be performed in any manner.

In addition, as in the present embodiment, the target object may be a specific type of object, and the images for training 61, 62, 63, 72, and 73 may be images in which a specific type of object is captured as a target object for training. For example, the target object may be a pasta product. In addition, an inference model may be generated and used for each food type. According to this configuration, it is possible to generate an inference model for detecting a foreign object with high accuracy for a specific type of object. However, the images for training 61, 62, 63, 72, and 73 that do not limit the target object to a specific type of object may be used.

In addition, as in the present embodiment, the ratio of the number of first normal images 61 acquired and used for training, the number of combinations of the second normal images 62 and the second foreign object images 72, and the number of combinations of the third normal images 63 and the third foreign object images 73 may be a ratio set in advance. For example, as described above, the numbers may be the same. By setting this ratio appropriately, a more appropriate and reliable inference model can be generated. However, this ratio does not need to be set in advance.

The model generation system 10 and the foreign object detection system 20 may be provided by the same entity, or may be provided by different entities. In addition, the model generation system 10 and the foreign object detection system 20 may be used by the same user, or may be used by different users.

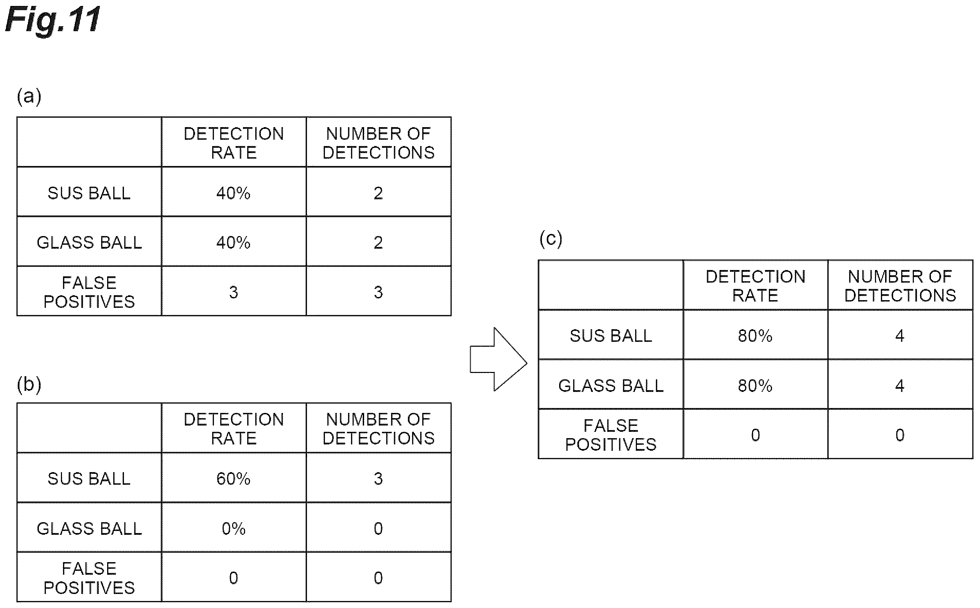

FIG. 11 shows examples of the results of actual foreign object detection using the present embodiment. Here, the results of foreign object detection using two conventional methods are compared with the results of the present embodiment as comparative examples. The first method of the conventional methods is as follows. Non-defective images (for example, the normal images 61 to 63 used in the present embodiment) that are images of target objects without foreign objects are prepared in advance. For a target image for which a foreign object is to be detected, a feature quantity (for example, a feature vector represented by a vector) for each portion of the image is calculated. A feature quantity for each portion of the image is also calculated for the non-defective image. The feature quantity of the target image is compared with the feature quantity of the non-defective image, and the presence of a foreign object in each portion is detected based on the comparison. For example, a distance between the feature vectors is calculated, and if the distance is equal to or greater than a threshold value set in advance, it is determined that a foreign object is present, and if the distance is not equal to or greater than the threshold value, it is determined that no foreign object is present.

The second method of the conventional methods is as follows. Non-defective images (for example, the normal images 61 to 63 used in the present embodiment) that are images of target objects without foreign objects are prepared in advance. From the non-defective images, an autoencoder is generated by machine learning training. By using the generated autoencoder as an inference model, a foreign object is detected in the same manner as the method using the foreign object detection system 20 according to the present embodiment.

The results shown in FIG. 11 are results obtained by inserting five SUS balls and five glass balls into a pasta product as foreign objects and detecting the presence of foreign objects. The table in (a) in FIG. 11 shows a result of the first method, table in (b) shows a result of the second method, and table in (c) shows a result of the present embodiment. In the first method, two SUS balls and two glass balls were detected, resulting in three false positives (foreign objects were detected even though there were none). In the second method, three SUS balls were detected, but no glass balls were detected, resulting in no false positives. In the present embodiment, four SUS balls and four glass balls were detected, resulting in no false positives. As shown in the results, in the present embodiment, it is possible to detect a foreign object with high accuracy compared with conventional methods.

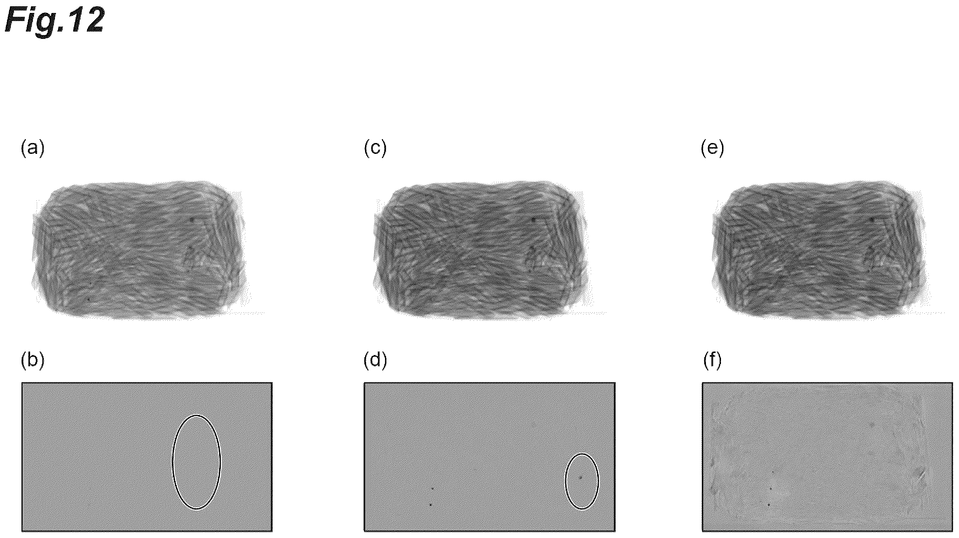

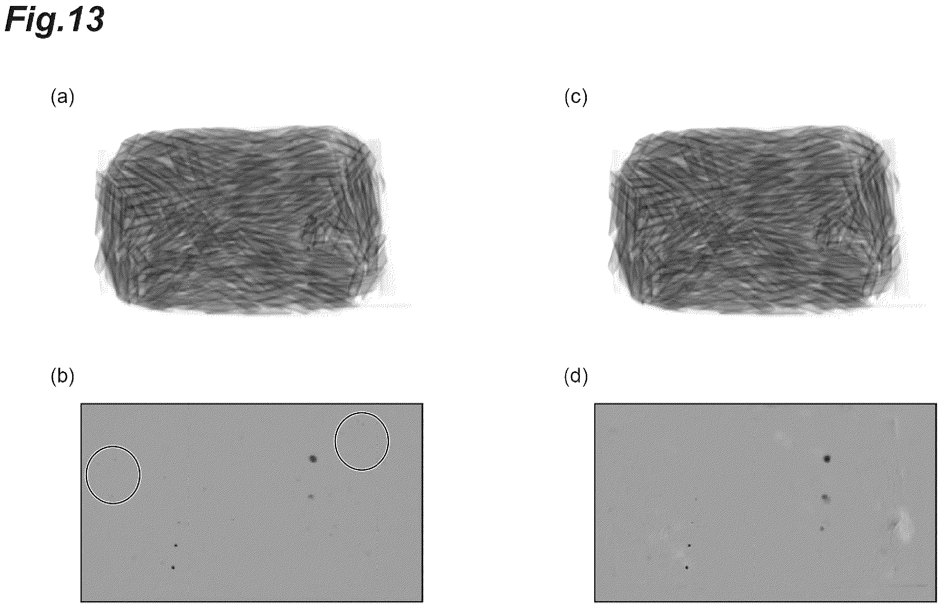

In addition, FIGS. 12 and 13 show examples of an image used for training and an image output from the inference model and an abnormality map. Images and abnormality maps shown in FIGS. 12(a) to 12(f) and 13(a) and 13(b) are comparative examples, and an image and an abnormality map shown in FIGS. 13(c) and 13(d) are examples according to the present embodiment.

FIGS. 12(a) and 12(b) show an image output from an inference model and an abnormality map when the inference model is generated by performing training using only the first normal images 61 (that is, when the inference model is an autoencoder). In this case, in the image output from the inference model, a foreign object is not removed, and the foreign object is not detected even in a portion surrounded by the ellipse on the abnormality map where the foreign object should be.

FIGS. 12(c) and 12(d) show an image output from an inference model and an abnormality map when the inference model is generated by performing training using only combinations of the second normal images 62 and the second foreign object images 72. In this case, in the image output from the inference model, a foreign object is removed, but a pasta portion is also excessively removed. A foreign object is detected even in a portion surrounded by the ellipse on the abnormality map where there is no foreign object.

FIGS. 12(e) and 12(f) show an image output from an inference model and an abnormality map when the inference model is generated by performing training using only combinations of the third normal images 63 and the third foreign object images 73. In this case, in the image output from the inference model, the structure of a pasta portion tends to be entirely removed.

FIGS. 13(a) and 13(b) show an image output from an inference model and an abnormality map when the inference model is generated by performing training using an equal number of first normal images 61 and combinations of the second normal images 62 and the second foreign object images 72. In this case, in the image output from the inference model, a foreign object is removed. However, there is some over-learning of foreign objects, and there is a portion of the pasta structure that is removed as a foreign object. A foreign object is detected even in a portion surrounded by the ellipse on the abnormality map where there is no foreign object.

FIG. 13(c) and 13(d) show an image output from an inference model and an abnormality map when the inference model is generated by performing training using an equal number of first normal images 61, combinations of the second normal images 62 and the second foreign object images 72, and combinations of the third normal image 63 and the third foreign object image 73 (that is, in the case of the present embodiment). In this case, in the image output from the inference model, a foreign object is removed appropriately compared to other examples, and the abnormality map also shows that an appropriate foreign object has been detected.

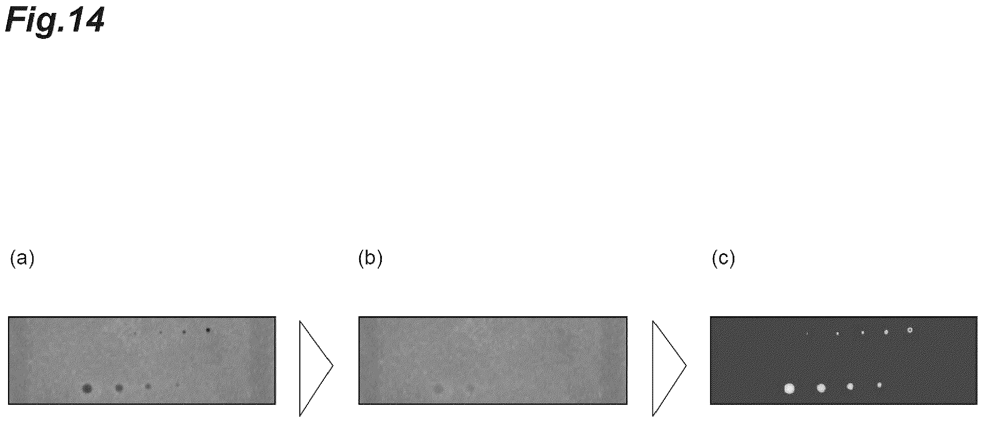

In the above explanation, the images of pasta have been used as examples, but examples when other types of objects are target objects are shown. FIG. 14 is an example of a case where rice is a target object. (a) in FIG. 14 is an example of a target image used to detect a foreign object, (b) is an example of an image output from the inference model when the target image is input to the inference model, and (c) is an example of an abnormality map generated from these images. When rice is a target object, the images for training 61, 62, 63, 72, and 73 in which rice is captured as a target object are used to perform training and generate an inference model. This inference model becomes a rice pass filter that allows the structure of rice to pass therethrough but does not allow the structure of a foreign object to pass therethrough.

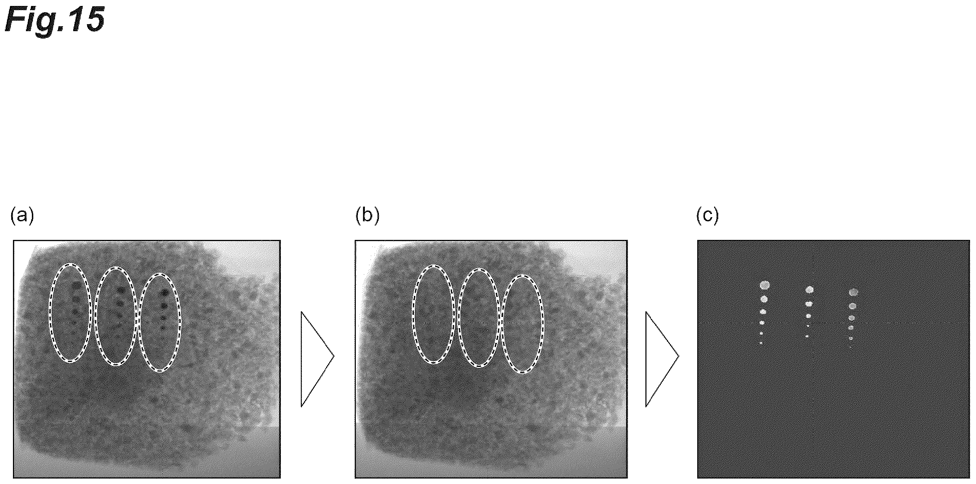

FIG. 15 shows an example when granola containing dried fruits is a target object. (a) in FIG. 15 is an example of a target image used to detect a foreign object, (b) is an example of an image output from the inference model when the target image is input to the inference model, and (c) is an example of an abnormality map generated from these images. Portions surrounded by the dashed lines in the drawing are portions where there is a foreign object. When granola is a target object, the images for training 61, 62, 63, 72, and 73 in which granola is captured as a target object are used to perform training and generate an inference model. This inference model becomes a granola pass filter that allows the structure of granola to pass therethrough but does not allow the structure of a foreign object to pass therethrough.

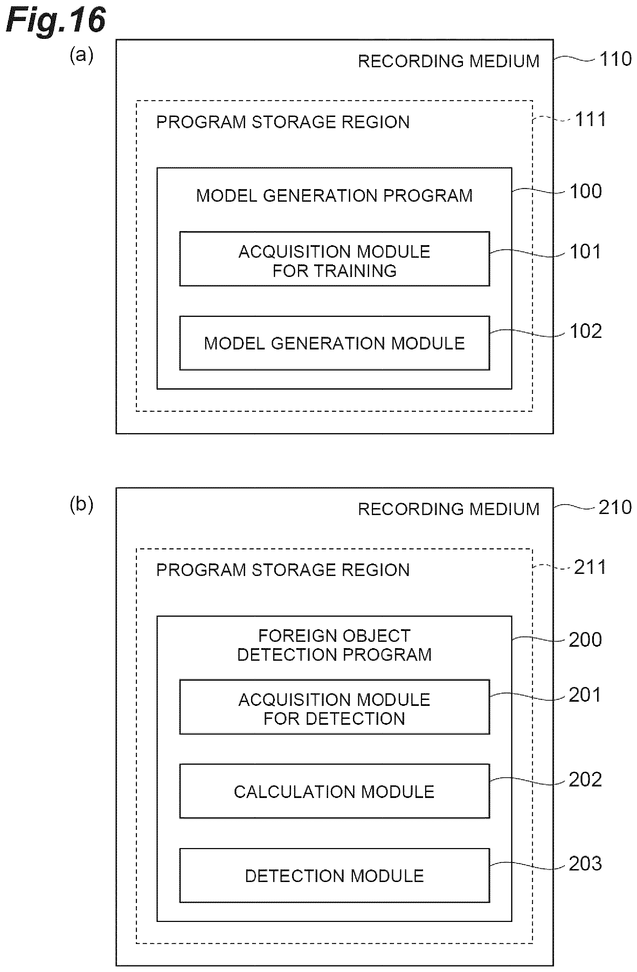

Next, a model generation program and a foreign object detection program for performing the above-described series of processes by the model generation system 10 and the foreign object detection system 20 will be described. As shown in FIG. 16(a), a model generation program 100 is stored in a program storage region 111 formed in a computer-readable recording medium 110, which is inserted into a computer and accessed or which is provided in the computer. The recording medium 110 may be a non-transitory recording medium.

The model generation program 100 includes an acquisition module for training 101 and a model generation module 102. The functions realized by executing the acquisition module for training 101 and the model generation module 102 are the same as the functions of the acquisition unit for training 11 and the model generation unit 12 of the model generation system 10 described above, respectively.

As shown in FIG. 16(b), a foreign object detection program 200 is stored in a program storage region 211 formed in a computer-readable recording medium 210, which is inserted into a computer and accessed or which is provided in the computer. The recording medium 210 may be a non-transitory recording medium. In addition, when the model generation program 100 and the foreign object detection program 200 are executed on the same computer, the recording medium 210 may be the same as the recording medium 110.

The foreign object detection program 200 includes an acquisition module for detection 201, a calculation module 202, and a detection module 203. The functions realized by executing the acquisition module for detection 201, the calculation module 202, and the detection module 203 are the same as the functions of the acquisition unit for detection 21, the calculation unit 22, and the detection unit 23 of the foreign object detection system 20 described above, respectively.

In addition, a part or entirety of each of the model generation program 100 and the foreign object detection program 200 may be transmitted through a transmission medium, such as a communication line, and received by another device and recorded (including installation). In addition, each module of the model generation program 100 and the foreign object detection program 200 may be installed on any of a plurality of computers instead of one computer. In this case, the above-described series of processes are performed by a computer system including the plurality of computers.

Next, further modifications and examples of the embodiment of the present invention will be described. In addition, modifications described below may be implemented by replacing a part of the above-described embodiment with the modifications or by adding the modifications to a part of the above-described embodiment.

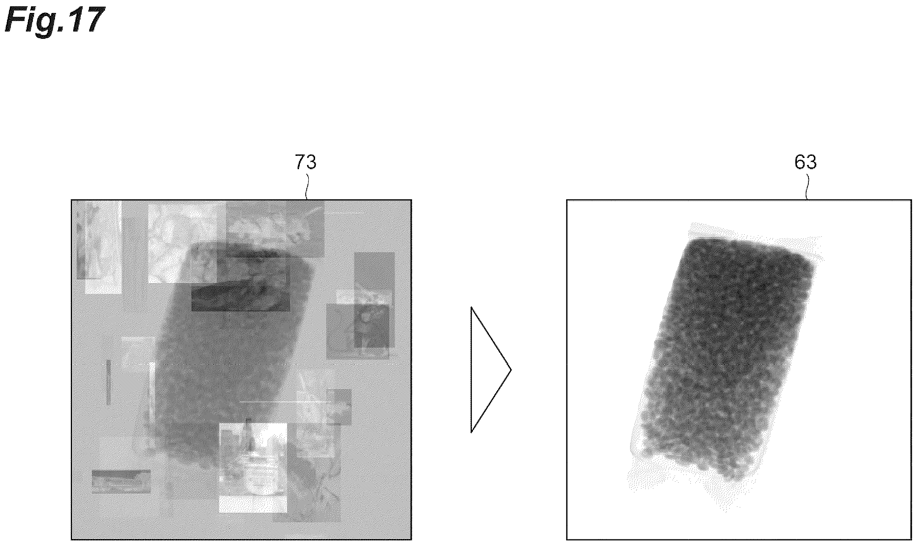

FIG. 17 shows other examples of the third normal image 63 and the third foreign object image 73. Like the third foreign object image 73 shown in FIG. 17, the third foreign object image 73 may be an image obtained by superimposing a plurality of partial natural images on the third normal image 63. Here, the partial natural image is a natural image smaller in size than the third normal image 63. Even using such a third foreign object image 73, it is possible to generate an appropriate inference model for detecting a foreign object. That is, classification can be sufficiently achieved using the characteristics of natural images, and it is also possible to handle any foreign object structure (unassumed foreign object).

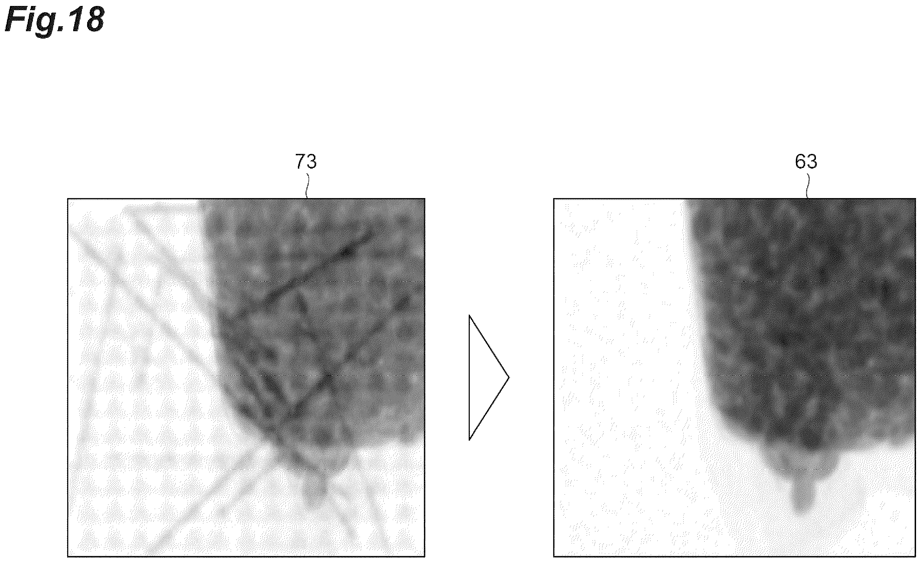

The foreign object added to the third foreign object image 73 may be an image drawn based on a calculation expression. FIG. 18 shows examples of the third normal image 63 and the third foreign object image 73 in this case. Like the third foreign object image 73 shown in FIG. 18, the image related to a foreign object is, for example, an image generated by simulation based on a calculation expression prepared in advance. The image may be generated by conventional methods. The image related to a foreign object added to the third normal image 63 may be generated by (the acquisition unit for training 11 of) the model generation system 10, or may be generated by a system other than the model generation system 10 and acquired by (the acquisition unit for training 11 of) the model generation system 10.

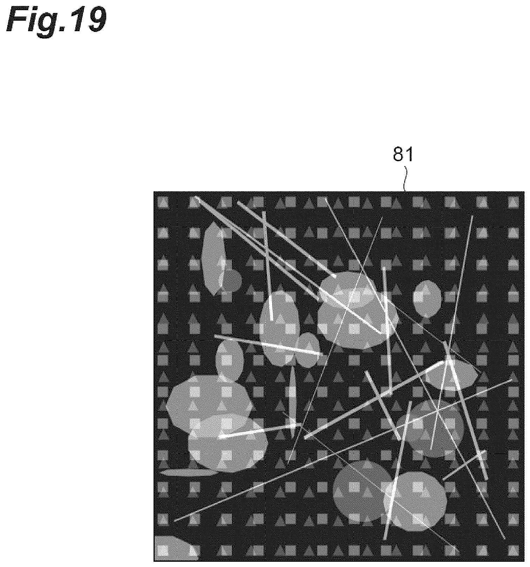

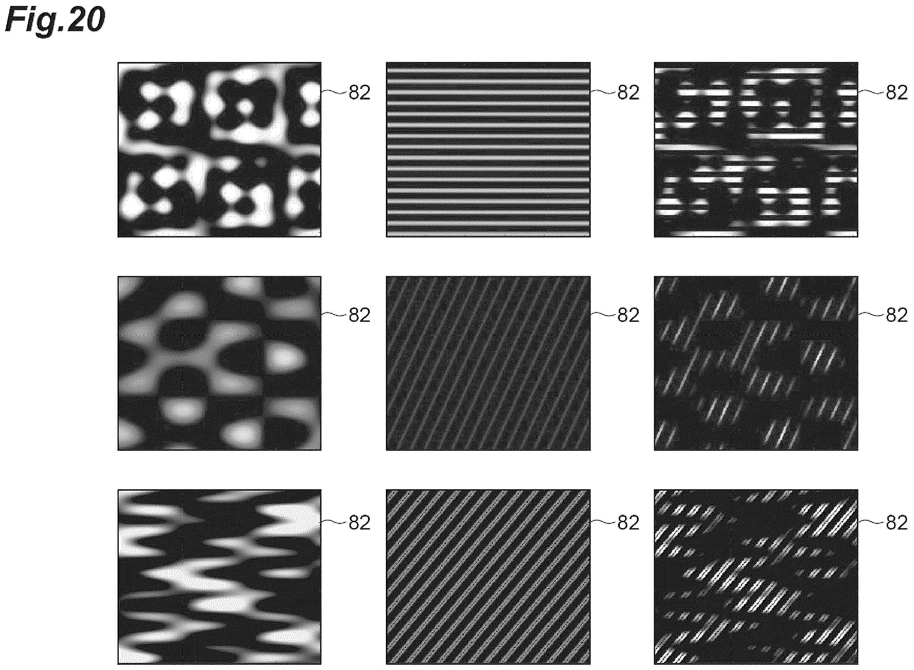

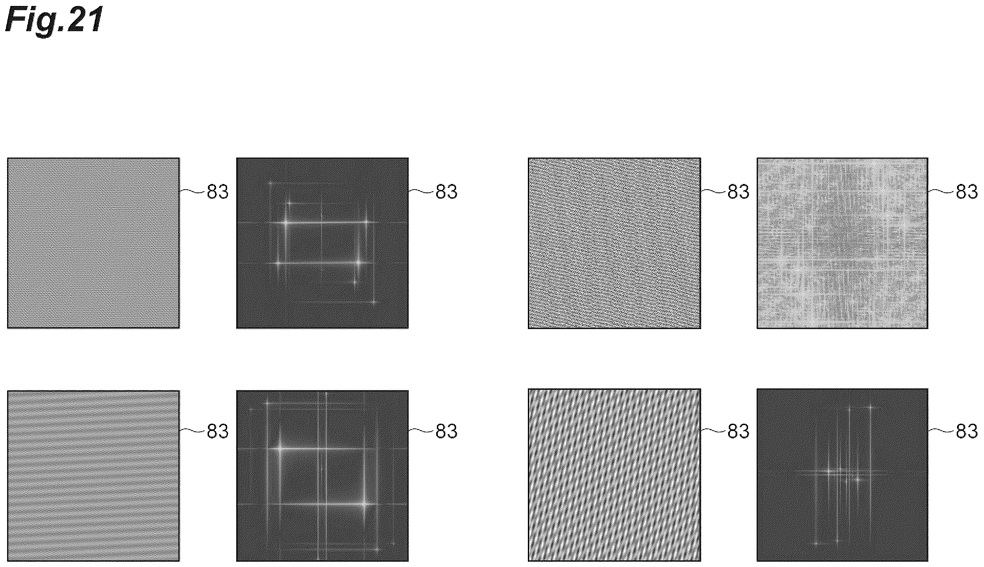

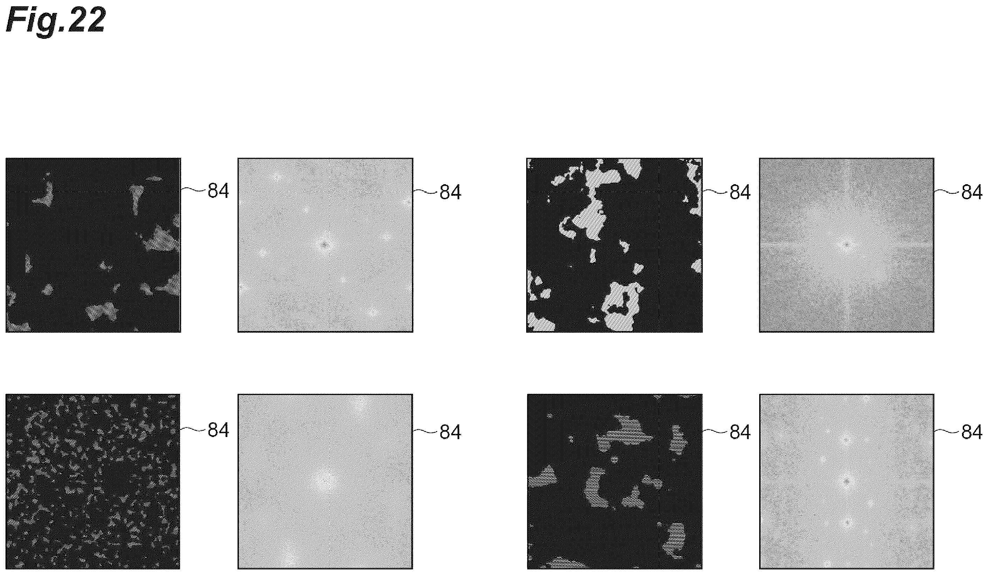

The image related to the foreign object added to the third foreign object image 73 and drawn based on a calculation expression may be a geometric pattern image 81 shown in FIG. 19. In addition, the image may be a procedural texture image 82 (an image of texture, such as quality, generated based on a calculation expression) shown in FIG. 20. In addition, the image may be a frequency image 83 shown in FIG. 21, which is an image generated based on a frequency-related calculation expression, or a combination of a plurality of frequency images 83. In addition, the image may be an image obtained by combining the above images, for example, an image obtained by cutting out the frequency image 83 based on the procedural texture image 82 as shown in FIG. 22.

It is possible to generate an inference model more appropriately and reliably even with a configuration in which the third foreign object image 73 based on the above images is used.

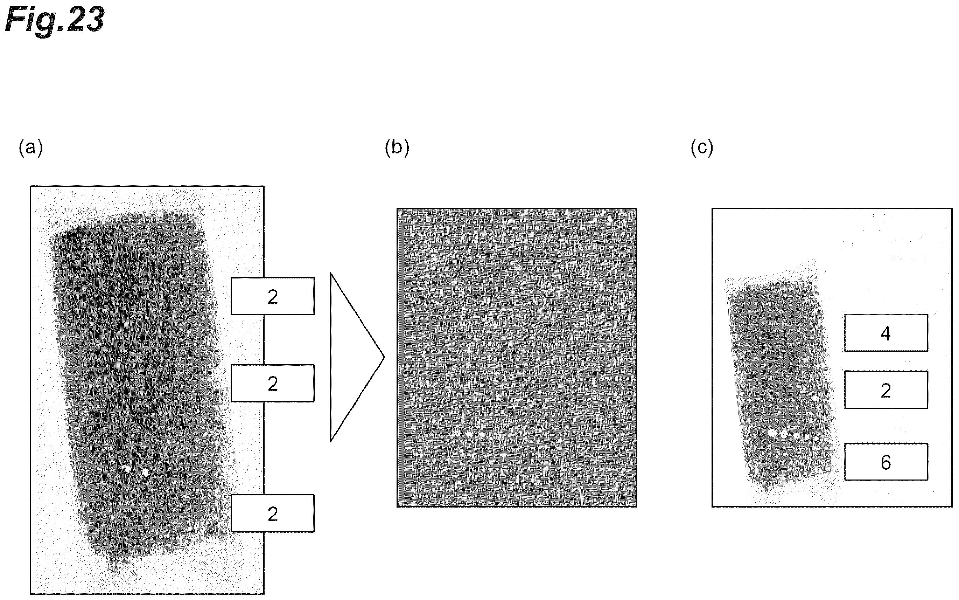

Next, an example of detecting a foreign object from an image with a coffee bean as a target object is shown. (a) in FIG. 23 shows a case where a detected foreign object is superimposed on the target image 30 when the foreign object is detected from the target image 30, which is used to detect a foreign object, by conventional simple binarization of an image. As shown in (a) in FIG. 23, in the conventional method, two foreign objects were detected in the upper part of the image, three foreign objects were detected in the middle part of the image, and two foreign objects were detected in in the lower part of the image. (b) in FIG. 23 shows an abnormality map obtained from the target image 30 using the inference model of the present embodiment, and (c) shows a case where foreign objects detected from the abnormality map are superimposed on the target image 30. As shown in (c) in FIG. 23, in the method according to the present embodiment, four foreign objects were detected in the upper part of the image, two foreign objects were detected in the middle part of the image, and six foreign objects were detected in in the lower part of the image.

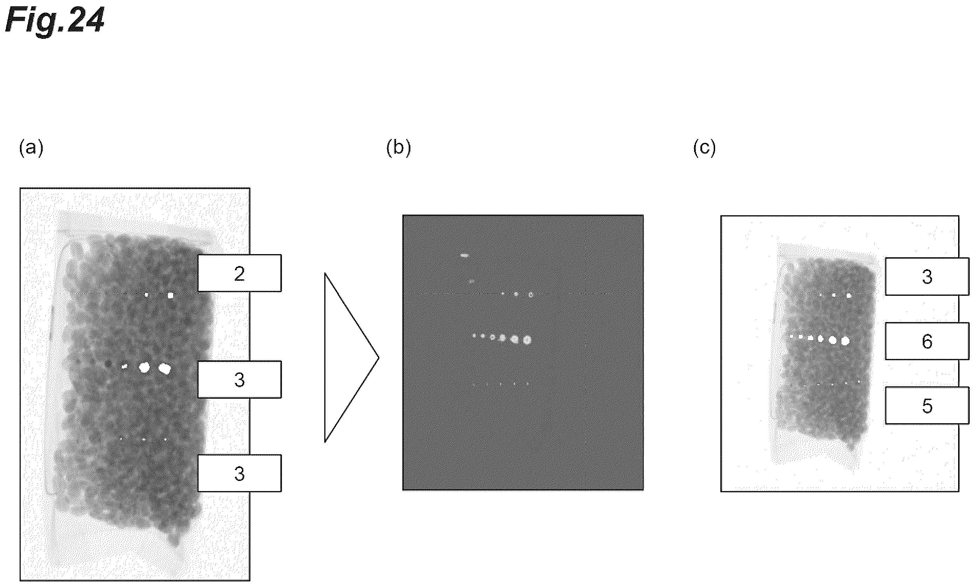

(a) in FIG. 24 shows a case where a detected foreign object is superimposed on the target image 30 when the foreign object is detected from the target image (an image different from the target image shown in FIG. 23) 30, which is used to detect a foreign object, by conventional simple binarization of an image. As shown in (a) in FIG. 24, in the conventional method, two foreign objects were detected in the upper part of the image, three foreign objects were detected in the middle part of the image, and three foreign objects were detected in in the lower part of the image. (b) in FIG. 24 shows an abnormality map obtained from the target image 30 using the inference model of the present embodiment, and (c) shows a case where foreign objects detected from the abnormality map are superimposed on the target image 30. As shown in (c) in FIG. 24, in the method according to the present embodiment, three foreign objects were detected in the upper part of the image, six foreign objects were detected in the middle part of the image, and five foreign objects were detected in in the lower part of the image. As shown in the examples of Figs 23 and 24, according to the method according to the present embodiment, actual foreign objects that could not be detected by the conventional methods are detected. Thus, according to the method according to the present embodiment, it is possible to detect a foreign object with high accuracy.

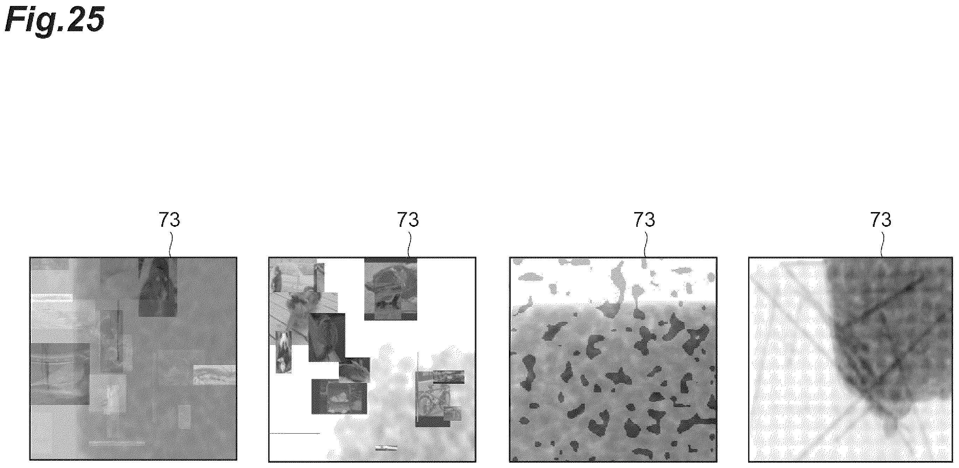

In the third foreign object image 73, a portion where a foreign object is added does not need to be the entire third foreign object image 73, but may be a part of the third foreign object image 73. In addition, in the third foreign object image 73, the position of the portion where the foreign object is added may be an irregular position (random position). In addition, the sizes of the individual foreign objects in the third foreign object image 73 may also be various sizes (multi-size). Therefore, the inference model can appropriately detect foreign objects even if the foreign objects detected from the target image 30 are present at irregular positions or have various sizes. FIG. 25 shows an example of the third foreign object image 73 in which a foreign object is added at an irregular position.

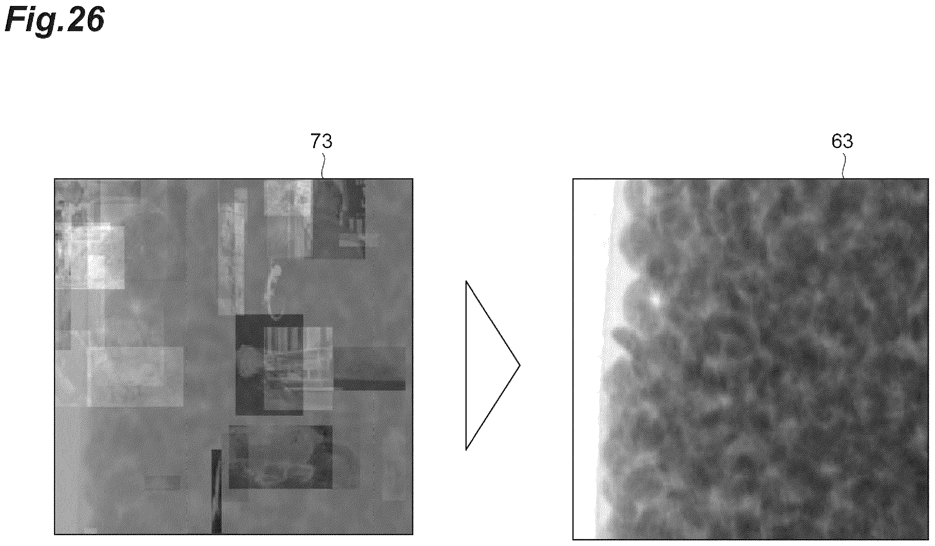

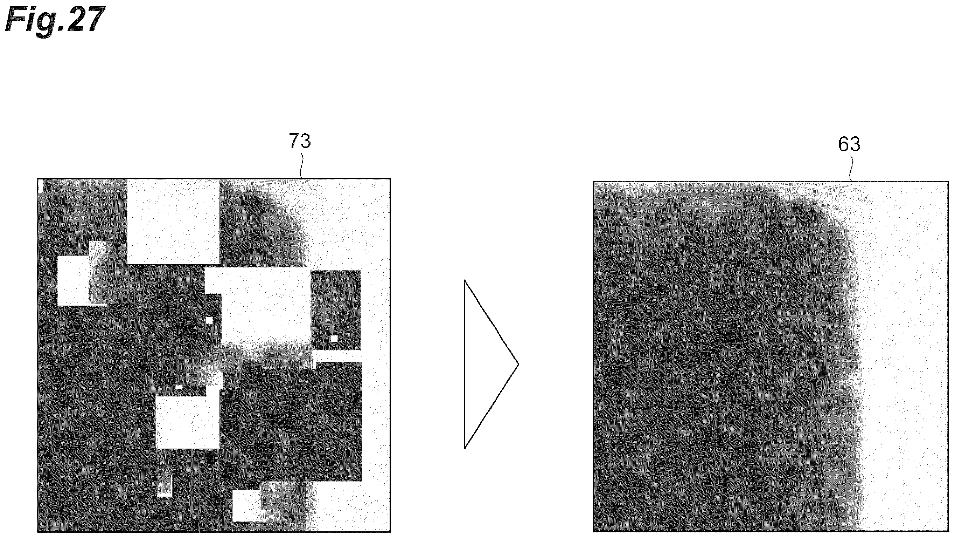

The third foreign object image 73 may be an image in which a foreign object not assumed to be a detection target is added to the third normal image 63 by at least one of transparent addition and replacement addition. FIG. 26 shows the third foreign object image 73 due to transparent addition of a foreign object and the corresponding third normal image 63. FIG. 27 shows the third foreign object image 73 due to replacement addition of a foreign object and the corresponding third normal image 63.

The transparent addition (mix-up) of a foreign object is to add a foreign object so that both the foreign object and the third normal image 63 before the addition are visible in a portion of the third foreign object image 73 where the foreign object is added. That is, the transparent addition of a foreign object is to superimpose a semi-transparent foreign object on the third normal image 63 before the addition, in a state in which the third normal image 63 can be seen through the foreign object (or a state in which the foreign object can be seen through the third normal image 63), in a portion for addition. When the transparent addition of a foreign object is performed, the percentage of the size of a portion where the foreign object is added in the entire third foreign object image 73 may be set to 10% to 100%. By increasing this percentage, the foreign object detection performance of the inference model can be improved.

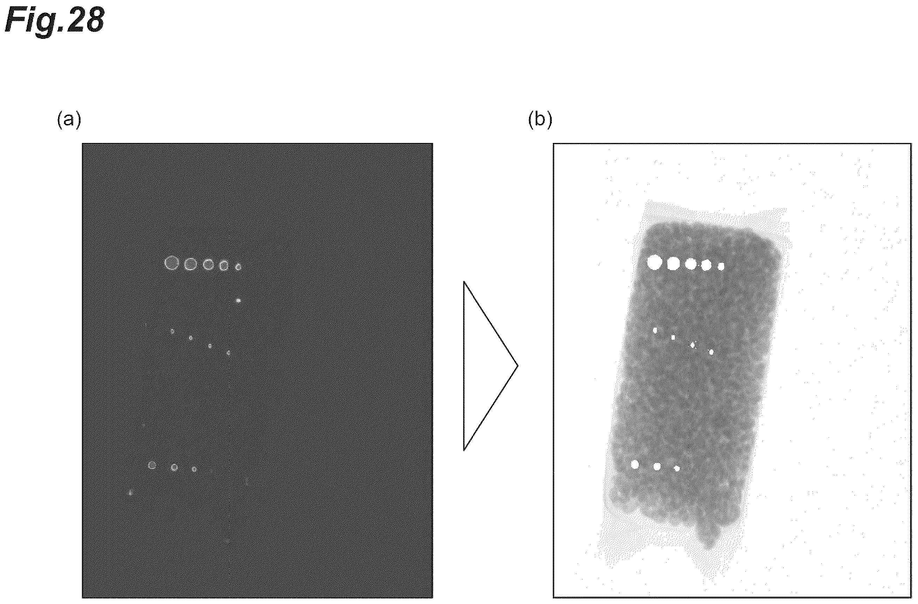

FIG. 28 shows an example of detecting a foreign object from the target image 30 with a coffee bean as a target object when the inference model is generated using the third foreign object image 73 obtained by transparent addition of a foreign object. (a) in FIG. 28 shows an abnormality map obtained from the target image 30, and (b) shows a case where foreign objects detected from the abnormality map are superimposed on the target image 30.

When the third foreign object image 73 obtained by transparent addition of a foreign object is used, it is possible to detect particularly local foreign objects (for example, changes in texture (scratches or abnormalities)) with high accuracy. In addition, similarly to the above-described transparent addition of a foreign object, when the target image 30 is one in which a foreign object and other objects transparently overlap each other, it is possible to detect the foreign object with high accuracy. For example, when the target image 30 is an X-ray image, it is possible to detect a foreign object with high accuracy.

The replacement addition (mix-out) of a foreign object is to add a foreign object by removing the third normal image 63 in a portion of the third foreign object image 73 where the foreign object is added. That is, the replacement addition of a foreign object is to superimpose a foreign object on the third normal image 63 before the addition in a state in which the third normal image 63 is shielded by the foreign object, in a portion for addition. When the replacement addition of a foreign object is performed, the percentage of the size of a portion where the foreign object is added in the entire third foreign object image 73 may be set to 10% to 60%. By increasing this percentage, the foreign object detection performance of the inference model can be improved.

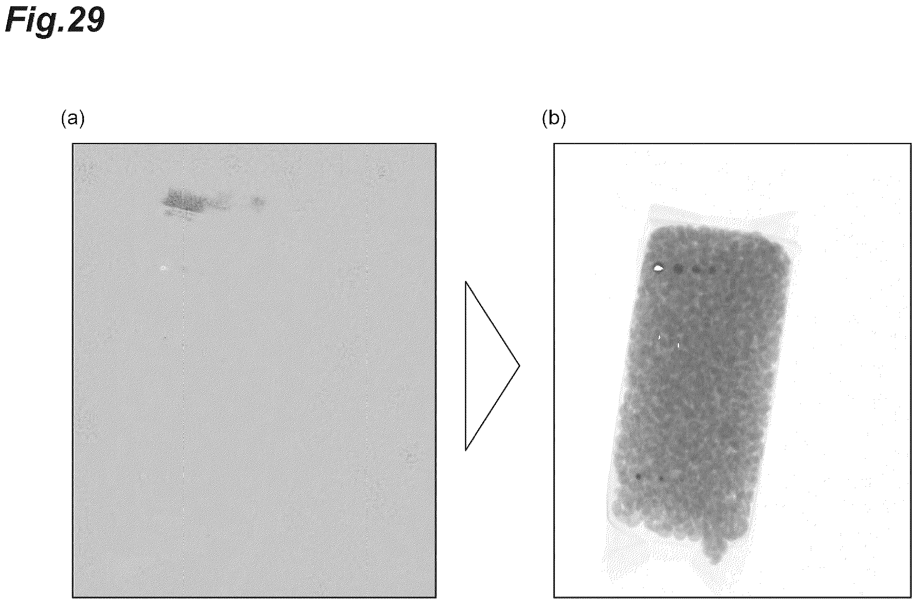

FIG. 29 shows an example of detecting a foreign object from the target image 30 with a coffee bean as a target object when the inference model is generated using the third foreign object image 73 obtained by replacement addition of a foreign object. (a) in FIG. 29 shows an abnormality map obtained from the target image 30, and (b) shows a case where a foreign object detected from the abnormality map is superimposed on the target image 30.

When the third foreign object image 73 obtained by replacement addition of a foreign object is used, it is possible to detect particularly comprehensive foreign objects (for example, a different color, a defect, or a bend) with high accuracy. This is because, in this case, the generated inference model is obtained by restoring a portion of the third normal image 63 that is shielded (for example, restoring it to a normal product with no foreign object) and learning even the positional relationship of objects captured in the image. For example, when the target image is an image similar to MVTecAD, which is a dataset used for evaluation in abnormality detection method, it is possible to detect a foreign object with high accuracy.

Even if the third foreign object image 73 is obtained by at least one of transparent addition and replacement addition, the acquisition unit for training 11 may acquire the third foreign object image 73 in the same manner as the method described above. When the acquisition unit for training 11 generates the third foreign object image 73, the third foreign object image 73 may be generated using the conventional techniques of transparent addition of an image and replacement of an image. The third foreign object image 73 may be generated by any of the transparent addition, the replacement addition, and both. A plurality of third foreign object images 73 may be of any one of the above types, or may be of a plurality of the above types.

As described above, even with the configuration in which the third foreign object image 73 is generated by at least one of transparent addition and replacement addition, it is possible to generate an inference model more appropriately and reliably.

In addition, when training an inference model, an image related to information to be output from the inference model may be an image obtained by performing image processing other than those described above on an image (normal images) related to the input to the inference model. The image processing is set in advance, and may be, for example, any one of rotation, inversion, pixel value change (brightness change), gamma correction, edge enhancement, and smoothing processing. The image processing may be performed on the second foreign object image 72 or the third foreign object image 73. In addition to the images for training 61, 62, 63, 72, and 73 described above, images that have been subjected to the image processing may be used for training the inference model.

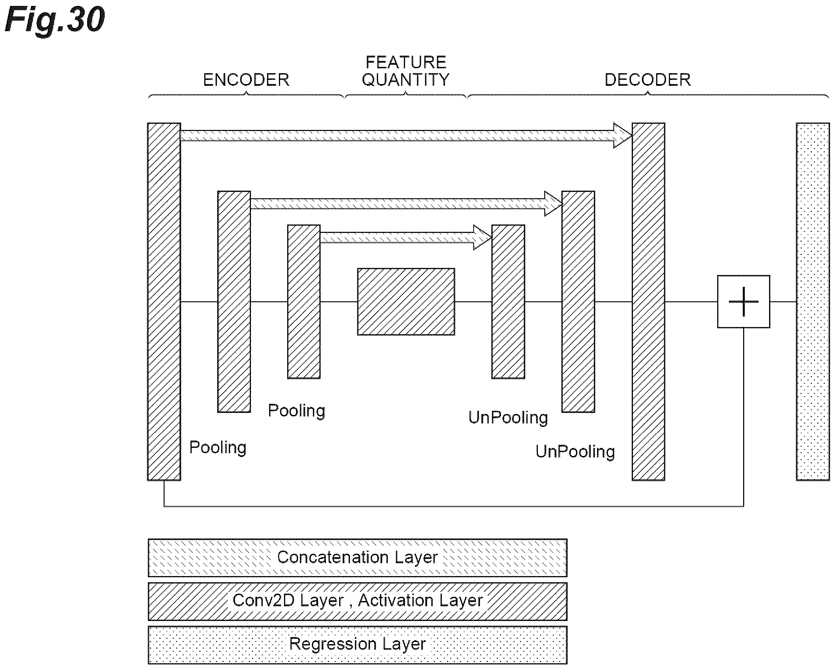

The inference model generated by the model generation system 10 and used by the foreign object detection system 20 may be a model that includes a neural network having a plurality of layers, has a structure that performs concatenation (connection) between the layers, and adds up an image after the concatenation and the input image. For example, the inference model is a neural network having the above-described configuration. The neural network is schematically shown in FIG. 30.

As shown in FIG. 30, the neural network includes an encoder that encodes an input image into a feature quantity and a decoder that decodes the feature quantity output from the encoder into an image. The encoder has a plurality of layers (Conv2D Layer, Activation Layer) where 2D convolution and activation are performed. Pooling occurs between the plurality of layers of the encoder. The decoder has a plurality of layers (Conv2D Layer, Activation Layer) where 2D convolution and activation are performed. Unpooling occurs between the plurality of layers of the decoder. A layer of the encoder layer is concatenated with a layer of the decoder having the same size as the encoder layer (Concatenation Layer). The two layers that are concatenated with each other are layers that are not adjacent to each other. Thus, the neural network is a U-Net type model with a pooling layer.

The image input to the encoder is added to the image output from the last layer of the decoder where 2D convolution and activation are performed, and an image obtained by the addition is output from the output layer (Regression Layer) of the decoder. The above image addition is the addition of pixel values for each corresponding pixel.

In the above neural network, the image output from the last layer of the decoder where 2D convolution and activation are performed can be an image of the foreign object included in the input image (to be precise, an image obtained by multiplying the pixel value of a pixel related to the foreign object by a negative value, which can be added to the input image to remove the foreign object). According to this structure, the inference model can output an image from which a foreign object portion has been appropriately removed. As a result, it is possible to detect a foreign object with high accuracy.

The model generation system 10 may generate a second inference model by performing new training based on the above-described inference model. That is, the model generation system 10 may perform two stages of training: training to generate an inference model and then training to generate a second inference model. The foreign object detection system 20 may detect a foreign object included in an image in which a target object is captured by using the second inference model generated by the model generation system 10 instead of the above-described inference model. In the following explanation, when simply referring to an inference model, this refers to the inference model of the embodiment described above (the inference model generated in the first stage).

In this case, the model generation unit 12 performs new training to generate a new second inference model in which a part for outputting information indicating the degree of foreign object at each position in the image input to the inference model is added to the output side of the generated inference model. That is, the model generation unit 12 generates a second inference model by performing transfer learning based on the inference model.

The second inference model is a model (identification model, classification model) that receives an image of a foreign object detection target and outputs (infers) information indicating the degree of foreign object at each position in the input image. For example, the second inference model outputs, for each pixel of the target image 30 for which a foreign object is to be detected, a value of a probability that the pixel is related to a foreign object (probability of pass/fail, classification value of class). In this case, the second inference model may output a value in the range of 0 to 1 for each pixel as the probability. The closer the output value is to 1, the higher the degree to which the pixel is related to a foreign object, and the closer the output value is to 0, the lower the degree to which the pixel is related to a foreign object.

In detecting a foreign object using the inference model, the foreign object is detected by taking the difference between the image input to the inference model and the image output from the inference model. In detecting a foreign object using the second inference model, it is not necessary to take the difference between images as in detecting a foreign object using the inference model.

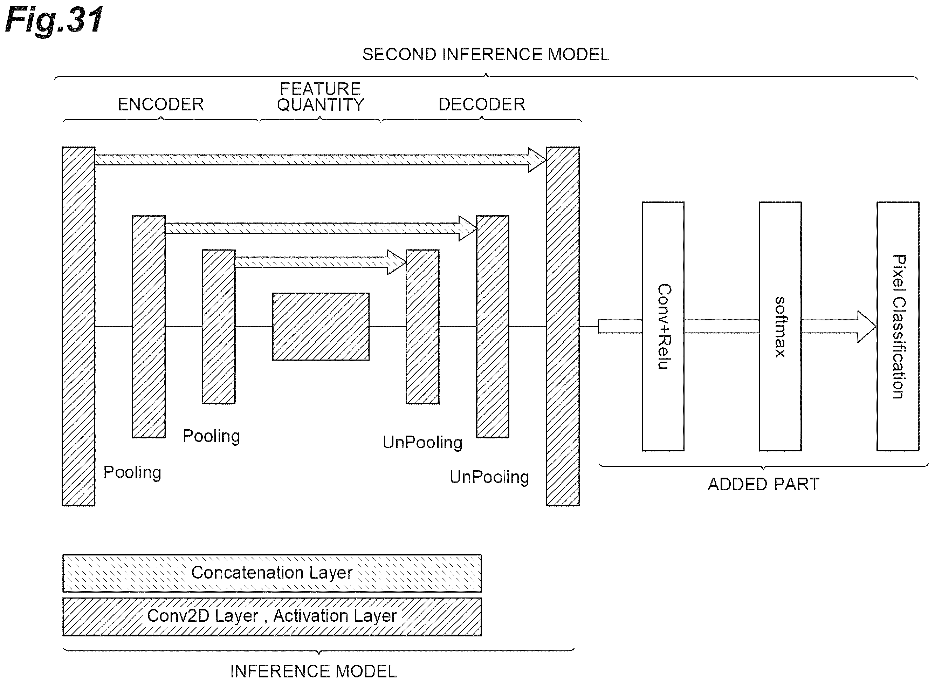

FIG. 31 schematically shows an example of the second inference model of the present embodiment. For example, the second inference model is a neural network. The second inference model is generated by adding a new layer to the output side of the inference model, which is a neural network, and performing new training.

In the example shown in FIG. 31, the inference model is a neural network including an encoder that encodes an input image into a feature quantity and a decoder that decodes the feature quantity output from the encoder into an image. The encoder has a plurality of layers (Conv2D Layer, Activation Layer) where 2D convolution and activation are performed. Pooling occurs between the plurality of layers of the encoder. The decoder has a plurality of layers (Conv2D Layer, Activation Layer) where 2D convolution and activation are performed. Unpooling occurs between the plurality of layers of the decoder. A layer of the encoder layer is concatenated with a layer of the decoder having the same size as the encoder layer (Concatenation Layer). The two layers that are concatenated with each other are layers that are not adjacent to each other. The last layer of the plurality of layers where 2D convolution and activation are performed in the decoder is the output layer of the inference model. In addition, the inference model used for the second inference model does not necessarily need to be the one shown in FIG. 31, and it can be any model as long as it is capable of constructing the second inference model.

The added part in the second inference model is a plurality of layers of a neural network. For example, three layers are added, with adjacent layers connected to each other, as shown in FIG. 31. The first layer from the inference model side is a layer where convolution and Relu function calculations are performed (Conv+Relu, Conv2D Layer, Activation Layer). This layer is connected to the output layer of the first inference model. The second layer is a layer where softmax function calculations are performed (softmax). The third layer is an output layer (Pixel Classification) that outputs a value of the probability described above.

The input layer of the second inference model is the same as the input layer of the inference model. In the second inference model, neurons for outputting information indicating the degree of foreign object at each position in the image related to the information input to the input layer is provided in the output layer. For example, the information output from the inference model is a value of the probability for each pixel of the image that the pixel is related to a foreign object, as described above. In this case, as many neurons as the number of pixels in the image are provided in the output layer, and the probability value of the corresponding pixel is output from each neuron. In addition, the information output from the inference model may be other than the probability value of each pixel as long as the information indicates the degree of foreign object at each position in the image described above.

In addition, the second inference model may be other than the neural network as long as the inference model is generated by machine learning training and the input and output described above are performed. Similarly to the first inference model, the second inference model is assumed to be used as a program module that is a part of artificial intelligence software.

The second inference model may depend on a type of a target object, similarly to the inference model. In this case, the second inference model can be treated like the inference model in this respect. In addition, regarding points that can be applied similarly other than those described above, the second inference model and the inference model may be similar.

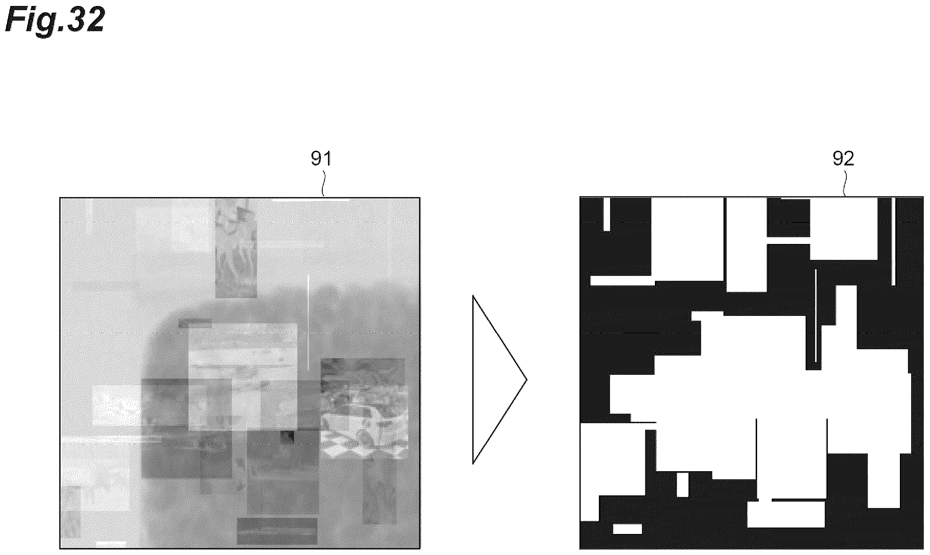

Next, the functions of the model generation system 10 and the foreign object detection system 20 related to the second inference model will be described. The acquisition unit for training 11 also acquires information for training the second inference model. The information for training the second inference model is a combination of an image for training the second inference model and information indicating the degree of foreign object at each position in the image. FIG. 32 shows examples of an image 91 for training the second inference model and information 92 indicating the degree of foreign object at each position in the image 91. The image 91 for training the second inference model can be at least one of the first normal image 61, the second foreign object image 72, and the third foreign object image 73 described above. Therefore, the acquisition unit for training 11 does not need to acquire the image 91 for training the second inference model separately from the image for training the inference model. However, the acquisition unit for training 11 may acquire the image 91 for training the second inference model separately from the image for training the inference model. In this case, the acquisition unit for training 11 may acquire the image 91 using the same method as a method for acquiring the image for training the inference model.

The information 92 indicating the degree of foreign object at each position in the image 91 for training the second inference model, which is a part of information for training the second inference model, is, for example, a value indicating whether or not each pixel of the image 91 for training the second inference model is related to a foreign object. As in the above example, when the output from the second inference model is a value in the range of 0 to 1 and the closer the output value is to 1, the higher the degree to which the pixel is related to a foreign object, the value of the information 92 is 1 if the pixel is related to the foreign object and 0 if the pixel is not related to the foreign object. The information 92 in FIG. 32 indicates a value for each image 91 for training the second inference model, with a white portion being 1 (that is, the white portion is a portion of a foreign object) and a black portion being 0 (that is, the black portion is a portion that is not a foreign object). In addition, the value of the information 92 does not necessarily need to be the above, but may be any value that corresponds to the output from the second inference model.

The acquisition unit for training 11 may generate and acquire the above information 92. For example, in the case of the image 91 for training the second inference model, the first normal image 61, the second foreign object image 72, and the third foreign object image 73, the acquisition unit for training 11 generates information for each pixel of these images 61, 72, and 73, in which a portion of a foreign object is set to 1 and a portion that is not a foreign object is set to 0, as the above information 92. The foreign object portion is, for example, a portion of an image that is added to a normal image as a foreign object. Alternatively, a portion that is a foreign object, in an image that is added to a normal image as a foreign object, may be detected by using an existing detection technique, and the detected portion may be regarded as a foreign object portion in the above information 92. That is, the above information 92 can be acquired without requiring annotation by the user, that is, annotation-free. In addition, the acquisition unit for training 11 may acquire the above information 92 by receiving the above information 92 input to the model generation system 10 by the user of the model generation system 10.

The acquisition unit for training 11 acquires a sufficient number of pieces of information for training the second inference model to allow the model generation unit 12 to appropriately train the second estimation model. The acquisition unit for training 11 outputs the acquired information for training the second inference model to the model generation unit 12.

The model generation unit 12 generates the second inference model, for example, as follows. The model generation unit 12 receives the information for training the second inference model from the acquisition unit for training 11. The model generation unit 12 performs training for generating the second inference model for each of the above combinations of information for training the second inference model. The training for generating the second inference model is performed after the first inference model is generated by training.

Hereinafter, an example will be described in which the second inference model receives an image itself as its input and outputs the above probability value. As shown in FIG. 32, the model generation unit 12 performs training in which the image 91 for training the second inference model is input to the second inference model and the information 92 on the probability value corresponding to the image 91 is output from the second inference model.

When training the second inference model, the encoder part of the inference model in the second inference model is not updated by training. That is, the first encoder part of the second inference model is updated only during the training of the inference model (training in the first stage), and the learning rate during the training of the second inference model (training in the second stage) is set to 0. During training in the second stage, the decoder part of the second inference model has a lower learning rate than the added part. For example, the learning rate of the decoder part is 1/100 of the learning rate of the added part. In addition, as a loss function during learning, for example, a cross entropy error is used. Training of the second inference model may be done in other ways than as described above. Each of the above training steps, that is, updating the parameters of the second inference model, can be performed in the same way as conventional machine learning training.

If the second inference model is one that receive information based on an image other than the image itself, the model generation unit 12 may generate information based on the image 91 from the image 91 that corresponds to the input to the second inference model and perform training using the generated information as input to the inference model.

The model generation unit 12 generates a second inference model, for example, by using all of the pieces of information for training the second inference model input from the acquisition unit for training 11. Alternatively, the model generation unit 12 may generate a second inference model by performing training until preset conditions for ending the training other than the above are satisfied. The generated second inference model is used in the foreign object detection system 20. The model generation unit 12 outputs the generated second inference model. Input and output of the second inference model may be performed in the same manner as input and output of the inference model described above. In addition, when the second inference model is used to detect a foreign object, the output of the inference model is not required.

When the second inference model is used, foreign object detection in the foreign object detection system 20 is performed as follows. The acquisition unit for detection 21 acquires the target image 30 for which a foreign object is to be detected. The acquisition unit for detection 21 acquires the target image 30 in the same manner as when an inference model is used, and outputs the target image 30 to the calculation unit 22.

The calculation unit 22 inputs information based on the target image 30 acquired by the acquisition unit for detection 21 to the second inference model, performs a calculation, and obtains an output from the second inference model. The calculation unit 22 receives and stores the second inference model generated by the model generation system 10. The calculation unit 22 receives the target image 30 from the acquisition unit for detection 21.

The calculation unit 22 inputs information based on the input target image 30 to the stored second inference model, performs a calculation, and obtains an output from the second inference model. The information input to the second inference model depends on the second inference model, and is, for example, the target image 30 itself as described above. In addition, the information input to the second inference model may be information based on the target image 30 other than the target image 30 itself. In this case, the calculation unit 22 generates information to be input to the second inference model from the target image 30. The information output from the second inference model depends on the second inference model, and is, for example, a probability value (class map) for each pixel of the target image 30 as described above. In addition, the information output from the second inference model may be information indicating the degree of foreign object at each position in the target image 30 other than the above. The calculation unit 22 outputs the information output from the second inference model to the detection unit 23.

The detection unit 23 detects a foreign object included in the target image 30 from the output from the second inference model obtained by the calculation unit 22. The detection unit 23 detects a foreign object, for example, as follows. The detection unit 23 receives from the calculation unit 22 information indicating the degree of foreign object at each position in the target image 30, which is an output from the second inference model, for example, a probability value for each pixel of the target image 30. The detection unit 23 stores in advance criteria for detecting a foreign object, for example, a threshold value for detection (for example, 0.5). The detection unit 23 compares the probability value, which is an output from the second inference model, with the threshold value for each pixel of the target image 30. For a pixel with a probability equal to or greater than the threshold value, the detection unit 23 determines that the portion of the pixel is a foreign object (a foreign object is captured in the portion of the pixel). For a pixel with a probability that is not equal to or greater than the threshold value, the detection unit 23 determines that the portion of the pixel is not a foreign object (the portion of the pixel is normal because no foreign object is captured therein). In addition, the detection unit 23 may detect a foreign object using a method other than the above so long as a foreign object included in the target image 30 is detected from the output from the second inference model obtained by the calculation unit 22.

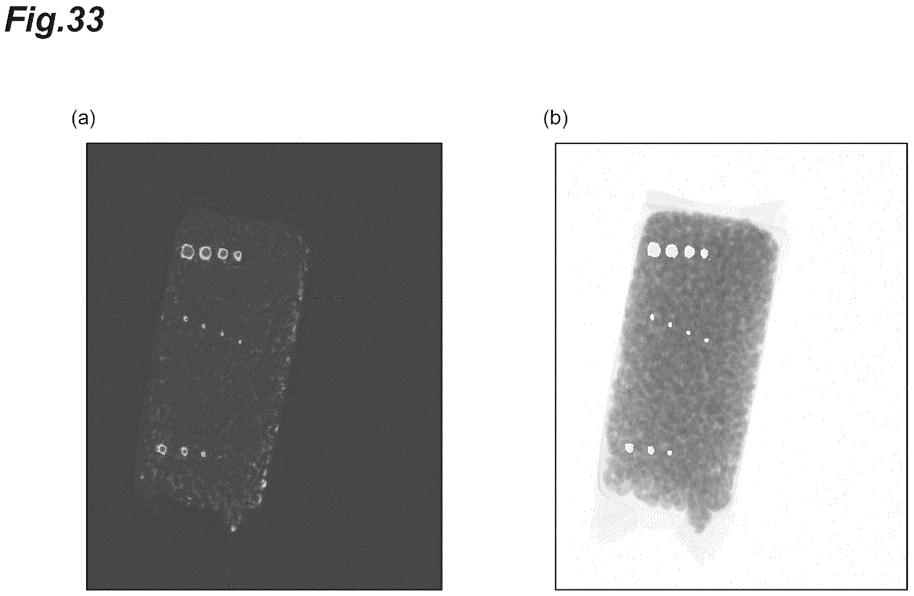

The detection unit 23 outputs information indicating the detection result. The information indicating the detection result may be output in the same manner as the method described above. (a) in FIG. 33 shows an example of the output (class map) from the second inference model. In addition, (b) in FIG. 33 shows a target image on which a foreign object detected by using this output is superimposed. In FIG. 33, a plurality of round portions aligned horizontally are foreign objects portions.

By generating the second inference model as described above and using the second inference model to detect a foreign object, it is possible to detect a foreign object easily and reliably. In addition, the information output from the second inference model has small variations depending on various conditions and target objects (samples) related to the target image 30, compared to, for example, the abnormality map described above. Therefore, the criteria (for example, the threshold value described above) used in detecting a foreign object can be easily set without having to be adapted to various conditions and target objects related to the target image 30. For this reason, by using the second inference model, a foreign object can be detected stably and appropriately even if uniform criteria are used regardless of various conditions and target objects related to the target image 30.

The model generation method, the model generation system, the model generation program, the foreign object detection method, the foreign object detection system, the foreign object detection program, and the inference model in this disclosure have the following configuration.
[1] A model generation method for generating an inference model used for detecting a foreign object included in an image with a target object captured, including:
   an acquisition step for training for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
   a model generation step for generating the inference model by performing training using the images for training acquired in the acquisition step for training,
   wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.
[2] The model generation method according to [1],
   wherein the foreign object not assumed to be a detection target is a natural image.
[3] The model generation method according to [1] or [2],
   wherein the second normal image and the third normal image are the first normal image, and
   in the acquisition step for training, the second foreign object image is generated and acquired by adding a foreign object assumed to be a detection target to the first normal image, and the third foreign object image is generated and acquired by adding a foreign object not assumed to be a detection target to the first normal image.
[4] The model generation method according to any one of [1] to [3],
   wherein the target object is a specific type of object, and
   the first normal image, the second normal image, the second foreign object image, the third normal image, and the third foreign object image acquired in the acquisition step for training are images in which the specific type of object is captured as the target object for training.
[5] A model generation method according to any one of [1] to [4],
   wherein a ratio of the number of first normal images, the number of combinations of the second normal images and the second foreign object images, and the number of combinations of the third normal images and the third foreign object images acquired in the acquisition step for training is a ratio set in advance.
[6] A model generation method according to any one of [1] to [5],
   wherein the foreign object not assumed to be a detection target is an image drawn based on a calculation expression.
[7] A model generation method according to any one of [1] to [6],
   wherein the third foreign object image is an image in which the foreign object not assumed to be a detection target is added to the third normal image by at least one of transparent addition and replacement addition.
[8] A model generation method according to any one of [1] to [7],
   wherein the inference model is a model that includes a neural network having a plurality of layers, has a structure that performs concatenation between the layers, and adds up an image after the concatenation and an input image.
[9] A model generation method according to any one of [1] to [8],
   wherein, in the model generation step, a new second inference model is generated by performing new training, the new second inference model being generated by adding a part for outputting information indicating a degree of foreign object at each position in an image input to the generated inference model to an output side of the inference model.
[10] A model generation system for generating an inference model used for detecting a foreign object included in an image with a target object captured, including:
   an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
   a model generation means for generating the inference model by performing training using the images for training acquired by the acquisition means,
   wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.
**[11]** A model generation program causing a computer to operate as a model generation system for generating an inference model used for detecting a foreign object included in an image with a target object captured, the model generation program causing the computer to function as:
   an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
   a model generation means for generating the inference model by performing training using the images for training acquired by the acquisition means,
   wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.
[12] A foreign object detection method for detecting a foreign object included in an image with a target object captured by using the inference model generated by the model generation method according to any one of [1] to [8], including:
   an acquisition step for detection for acquiring a target image for which a foreign object is to be detected;
   a calculation step for inputting information based on the target image acquired in the acquisition step for detection to the inference model, performing a calculation, and obtaining an output from the inference model; and
   a detection step for calculating a difference between information related to the input to the inference model in the calculation step and information related to the output from the inference model and detecting a foreign object included in the target image from the calculated difference.
[13] A foreign object detection method for detecting a foreign object included in an image with a target object captured by using the second inference model generated by the model generation method according to [9], including:
   an acquisition step for detection for acquiring a target image for which a foreign object is to be detected;
   a calculation step for inputting information based on the target image acquired in the acquisition step for detection to the second inference model, performing a calculation, and obtaining an output from the second inference model; and
   a detection step for detecting a foreign object included in the target image from the output from the second inference model obtained in the calculation step.
[14] A foreign object detection system for detecting a foreign object included in an image with a target object captured by using the inference model generated by the model generation method according to any one of [1] to [8], including:
   an acquisition means for detection for acquiring a target image for which a foreign object is to be detected;
   a calculation means for inputting information based on the target image acquired by the acquisition means for detection to the inference model, performing a calculation, and obtaining an output from the inference model; and
   a detection means for calculating a difference between information related to the input to the inference model by the calculation means and information related to the output from the inference model and detecting a foreign object included in the target image from the calculated difference.
[15] A foreign object detection system for detecting a foreign object included in an image with a target object captured by using the second inference model generated by the model generation method according to [9], including:
   an acquisition means for detection for acquiring a target image for which a foreign object is to be detected;
   a calculation means for inputting information based on the target image acquired by the acquisition means for detection to the second inference model, performing a calculation, and obtaining an output from the second inference model; and
   a detection means for detecting a foreign object included in the target image from the output from the second inference model obtained by the calculation means.
[16] A foreign object detection program causing a computer to operate as a foreign object detection system that detects a foreign object included in an image with a target object captured by using the inference model generated by the model generation method according to any one of [1] to [8], the foreign object detection program causing the computer to function as:
   an acquisition means for detection for acquiring a target image for which a foreign object is to be detected;
   a calculation means for inputting information based on the target image acquired by the acquisition means for detection to the inference model, performing a calculation, and obtaining an output from the inference model; and
   a detection means for calculating a difference between information related to the input to the inference model by the calculation means and information related to the output from the inference model and detecting a foreign object included in the target image from the calculated difference.
[17] A foreign object detection program causing a computer to operate as a foreign object detection system that detects a foreign object included in an image with a target object captured by using the inference model generated by the model generation method according to [9], the foreign object detection program causing the computer to function as:
   an acquisition means for detection for acquiring a target image for which a foreign object is to be detected;
   a calculation means for inputting information based on the target image acquired by the acquisition means for detection to the second inference model, performing a calculation, and obtaining an output from the second inference model; and
   a detection means for detecting a foreign object included in the target image from the output from the second inference model obtained by the calculation means.
[18] An inference model for causing a computer to function to receive information based on an image, perform a calculation according to the input, and output information,
   wherein the inference model is generated by the model generation method according to any one of [1] to [8].

### Reference Signs List

10: model generation system, 11: acquisition unit for training, 12: model generation unit, 20: foreign object detection system, 21: acquisition unit for detection, 22: calculation unit, 23: detection unit, 100: model generation program, 101: acquisition module for training, 102: model generation module, 110: recording medium, 111: program storage region, 201: acquisition module for detection, 202: calculation module, 203: detection module, 200: foreign object detection program, 210: recording medium, 211: program storage region.

## Claims

1. A model generation method for generating an inference model used for detecting a foreign object included in an image with a target object captured, comprising:
an acquisition step for training for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
a model generation step for generating the inference model by performing training using the images for training acquired in the acquisition step for training,
wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

2. The model generation method according to claim 1,
wherein the foreign object not assumed to be a detection target is a natural image.

3. The model generation method according to claim 1 or 2,
wherein the second normal image and the third normal image are the first normal image, and
in the acquisition step for training, the second foreign object image is generated and acquired by adding a foreign object assumed to be a detection target to the first normal image, and the third foreign object image is generated and acquired by adding a foreign object not assumed to be a detection target to the first normal image.

4. The model generation method according to claim 1 or 2,
wherein the target object is a specific type of object, and
the first normal image, the second normal image, the second foreign object image, the third normal image, and the third foreign object image acquired in the acquisition step for training are images in which the specific type of object is captured as the target object for training.

5. The model generation method according to claim 1 or 2,
wherein a ratio of the number of first normal images, the number of combinations of the second normal images and the second foreign object images, and the number of combinations of the third normal images and the third foreign object images acquired in the acquisition step for training is a ratio set in advance.

6. The model generation method according to claim 1 or 2,
wherein the foreign object not assumed to be a detection target is an image drawn based on a calculation expression.

7. The model generation method according to claim 1 or 2,
wherein the third foreign object image is an image in which the foreign object not assumed to be a detection target is added to the third normal image by at least one of transparent addition and replacement addition.

8. The model generation method according to claim 1 or 2,
wherein the inference model is a model that includes a neural network having a plurality of layers, has a structure that performs concatenation between the layers, and adds up an image after the concatenation and an input image.

9. The model generation method according to claim 1 or 2,
wherein, in the model generation step, a new second inference model is generated by performing new training, the new second inference model being generated by adding a part for outputting information indicating a degree of foreign object at each position in an image input to the generated inference model to an output side of the inference model.

10. A model generation system for generating an inference model used for detecting a foreign object included in an image with a target object captured, comprising:
an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
a model generation means for generating the inference model by performing training using the images for training acquired by the acquisition means,
wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

11. A model generation program causing a computer to operate as a model generation system for generating an inference model used for detecting a foreign object included in an image with a target object captured, the model generation program causing the computer to function as:
an acquisition means for acquiring, as images for training, a first normal image with a target object for training captured, a second normal image with a target object for training captured, a second foreign object image obtained by adding a foreign object assumed to be a detection target to the second normal image, a third normal image with a target object for training captured, and a third foreign object image obtained by adding a foreign object not assumed to be a detection target to the third normal image; and
a model generation means for generating the inference model by performing training using the images for training acquired by the acquisition means,
wherein the training includes training in which information based on the first normal image is input to the inference model and information based on the first normal image is output from the inference model, training in which information based on the second foreign object image is input to the inference model and information based on the second normal image is output from the inference model, and training in which information based on the third foreign object image is input to the inference model and information based on the third normal image is output from the inference model.

12. A foreign object detection method for detecting a foreign object included in an image with a target object captured by using the inference model generated by the model generation method according to claim 1 or 2, comprising:
an acquisition step for detection for acquiring a target image for which a foreign object is to be detected;
a calculation step for inputting information based on the target image acquired in the acquisition step for detection to the inference model, performing a calculation, and obtaining an output from the inference model; and
a detection step for calculating a difference between information related to the input to the inference model in the calculation step and information related to the output from the inference model and detecting a foreign object included in the target image from the calculated difference.

13. A foreign object detection method for detecting a foreign object included in an image with a target object captured by using the second inference model generated by the model generation method according to claim 9, comprising:
an acquisition step for detection for acquiring a target image for which a foreign object is to be detected;
a calculation step for inputting information based on the target image acquired in the acquisition step for detection to the second inference model, performing a calculation, and obtaining an output from the second inference model; and
a detection step for detecting a foreign object included in the target image from the output from the second inference model obtained in the calculation step.

14. A foreign object detection system for detecting a foreign object included in an image with a target object captured by using the inference model generated by the model generation method according to claim 1 or 2, comprising:
an acquisition means for detection for acquiring a target image for which a foreign object is to be detected;
a calculation means for inputting information based on the target image acquired by the acquisition means for detection to the inference model, performing a calculation, and obtaining an output from the inference model; and
a detection means for calculating a difference between information related to the input to the inference model by the calculation means and information related to the output from the inference model and detecting a foreign object included in the target image from the calculated difference.

15. A foreign object detection system for detecting a foreign object included in an image with a target object captured by using the second inference model generated by the model generation method according to claim 9, comprising:
an acquisition means for detection for acquiring a target image for which a foreign object is to be detected;
a calculation means for inputting information based on the target image acquired by the acquisition means for detection to the second inference model, performing a calculation, and obtaining an output from the second inference model; and
a detection means for detecting a foreign object included in the target image from the output from the second inference model obtained by the calculation means.

16. A foreign object detection program causing a computer to operate as a foreign object detection system that detects a foreign object included in an image with a target object captured by using the inference model generated by the model generation method according to claim 1 or 2, the foreign object detection program causing the computer to function as:
an acquisition means for detection for acquiring a target image for which a foreign object is to be detected;
a calculation means for inputting information based on the target image acquired by the acquisition means for detection to the inference model, performing a calculation, and obtaining an output from the inference model; and
a detection means for calculating a difference between information related to the input to the inference model by the calculation means and information related to the output from the inference model and detecting a foreign object included in the target image from the calculated difference.

17. A foreign object detection program causing a computer to operate as a foreign object detection system that detects a foreign object included in an image with a target object captured by using the inference model generated by the model generation method according to claim 9, the foreign object detection program causing the computer to function as:
an acquisition means for detection for acquiring a target image for which a foreign object is to be detected;
a calculation means for inputting information based on the target image acquired by the acquisition means for detection to the second inference model, performing a calculation, and obtaining an output from the second inference model; and
a detection means for detecting a foreign object included in the target image from the output from the second inference model obtained by the calculation means.

18. An inference model for causing a computer to function to receive information based on an image, perform a calculation according to the input, and output information,
wherein the inference model is generated by the model generation method according to claim 1 or 2.
